# EUROPEAN PATENT APPLICATION

(11) **EP 4 117 314 A1**
(43) Date of publication of application: **11.01.2023**
(21) Application number: 21774974.6
(22) Date of filing: 23.03.2021
(51) Int. Cl.: H04W 4/00

(54) **CONNECTION ESTABLISHMENT METHOD AND COMMUNICATION DEVICE AND SYSTEM**

(30) Priority: 25.03.2020 CN 202010220128
(71) Applicant: Huawei Technologies Co., Ltd., Shenzhen, Guangdong 518129, (CN)
(72) Inventor: YAO, Qi, Shenzhen, Guangdong 518129 (CN); ZONG, Zaifeng, Shenzhen, Guangdong 518129 (CN)
(74) Representative: Maiwald GmbH
(86) International application number: PCT/CN2021/082337
(87) International publication number: WO 2021/190488

(57) **Abstract**

Embodiments of this application disclose a connection establishment method, a communication apparatus, and a system which are applied to a scenario in which a terminal device connects to an edge network, to improve a success rate of establishing a connection by the terminal device with the edge network. Embodiments of this application provide the connection establishment method. The method includes: A core network element sends first information to at least one control network element, where the first information indicates that an edge network corresponding to a user plane network element serving the terminal device changes. The at least one control network element sends connection information of a first network element to the terminal device based on the first information, where the first network element is a network element in a first edge network corresponding to the user plane network element. After receiving the connection information of the first network element, the terminal device establishes a connection between the terminal device and the first network element based on the connection information.

## Description

This application claims priority to Chinese Patent Application No. 202010220128.4, filed with the China National Intellectual Property Administration on March 25, 2020 and entitled "CONNECTION ESTABLISHMENT METHOD, COMMUNICATION APPARATUS, AND SYSTEM", which is incorporated herein by reference in its entirety.

### TECHNICAL FIELD

This application relates to the field of communication technologies, and in particular, to a connection establishment method, a communication apparatus, and a system.

### BACKGROUND

In a 5th generation mobile communication system (5th generation wireless system, 5G), a gateway is split into a control plane (control plane) and a user plane (user plane). The user plane and the control plane may separately support independent scaling, to improve elasticity and flexibility of the communication system. In a logical set of the control plane, the user plane can be deployed to be closer to user, to reduce a transmission delay.

After accessing a network, user equipment (user equipment, UE) in the communication system establishes a protocol data unit (protocol data unit, PDU) session, accesses an external data network (data network, DN) by using the PDU session, and interacts with an application network element deployed in the data network. Since data networks accessed by a user are different, a network element that implements a session management function (session management function, SMF) may choose to access a network element that implements a user plane function (user plane function, UPF) in a data network, and access an application network element via the UPF. The UPF network element may be used as an uplink classifier (uplink classifier, ULCL), and the ULCL may steer some traffic to a local data network for local routing.

To meet the requirements of some low-delay and high-bandwidth applications, application network elements can be deployed at the edge of the data network, so that the application network elements can be closer to users, further reducing an end-to-end service delay and improving a network bandwidth. For example, the data network at the edge is an environment (edge hosting environment, EHE) or a data center (data center, DC) in which an edge application can be deployed. The EHE may also be referred to as an edge data network (edge data network, EDN). A system architecture of the EHE generally includes an edge enabler server (edge enabler server, EES). A system architecture of the DC includes a mobile edge computing platform (mobile edge computing platform, MEP).

Currently, the UE can obtain specific edge data network information based only on preconfigured information, and the UE can attempt to connect only to the edge of a preconfigured data network. This reduces a success rate of establishing a connection by the UE with the edge of the data network.

### SUMMARY

Embodiments of this application provide a connection establishment method, a communication apparatus, and a system, to improve a success rate of establishing a connection by a terminal device with an edge network.

To resolve the foregoing technical problem, embodiments of this application provide the following technical solutions.

According to a first aspect, an embodiment of this application provides a connection establishment method. The method includes: A control network element receives first information from a core network element, where the first information indicates that an edge network corresponding to a user plane network element serving a terminal device changes. The control network element sends connection information of a first network element to the terminal device based on the first information, where the first network element is a network element in a first edge network corresponding to the user plane network element, and the connection information is used for the terminal device to connect to the first network element. In this embodiment of this application, the terminal device may obtain, from the control network element, the connection information of the first network element, and establish a connection between the terminal device and the first network element. The edge network does not need to be preconfigured for the terminal device provided in this embodiment of this application. The terminal device may establish the connection between the terminal device and the first network element based on the connection information of the first network element sent by the control network element. In this case, connection establishment is dynamically triggered based on a change of the edge network corresponding to the user plane network element, and a success rate of establishing a connection by the terminal device with the edge network is improved.

In a possible implementation, before that a control network element receives first information from a core network element, the method further includes: The control network element sends subscription request information to the core network element, where the subscription request information requests the core network element to send the first information when detecting that a location of the terminal device changes, the subscription request information requests the core network element to send the first information when detecting that the edge network corresponding to the user plane network element changes, or the subscription request information requests the core network element to send the first information when detecting that a user plane management event occurs. In this solution, the control network element may further send the subscription request information to the core network element, and the core network element receives the subscription request information sent by the at least one control network element. The core network element detects, based on the subscription request information, whether the location of the terminal device changes, detects whether the edge network corresponding to the user plane network element changes, or detects whether the user plane management event occurs. The core network element may send the first information when detecting that the location of the terminal device changes, send the first information when detecting that the edge network corresponding to the user plane network element changes, or send the first information when detecting that the user plane management event occurs. Therefore, the core network element may send the foregoing first information to the control network element by using the subscription request information sent by the control network element to the core network element, and the control network element may send the connection information of the first network element based on the first information, so that the terminal device is connected to the first edge network by using the connection information.

In a possible implementation, the first information further includes the location of the terminal device, and the method further includes: The control network element determines the first edge network or determines the first network element based on at least the location of the terminal device. In this solution, service range information of a network element in the edge network is configured on the control network element. When the first information includes the location of the terminal device, the control network element determines that a network element whose service range includes the location of the terminal device is the first network element. The control network element determines the first edge network or determines the first network element based on at least the location of the terminal device. In other words, the control network element may determine, based on the location of the terminal device, the first edge network in a plurality of edge networks corresponding to a plurality of user plane network elements serving the terminal device. Alternatively, the control network element may determine, based on the location of the terminal device, the first network element in network elements in a plurality of edge networks.

In a possible implementation, the control network element is a central control network element, and a plurality of edge networks correspond to the user plane network element; and that the control network element sends connection information of a first network element to the terminal device based on the first information includes: The central control network element selects at least one edge network from the plurality of edge networks as the first edge network, or the central control network element selects at least one network element from network elements included in the plurality of edge networks as the first network element; and the central control network element sends the connection information to the terminal device. In this embodiment of this application, the central control network element may select the first edge network from the plurality of edge networks, or may select the first network element from the network elements included in the plurality of edge networks. In this case, the central control network element may send the connection information of the selected first network element to the terminal device, so that the terminal device can establish a connection with the first network element selected by the central control network element from the first edge network, thereby improving a success rate of establishing a connection by the terminal device with the edge network.

In a possible implementation, the method further includes: The central control network element receives a plurality of pieces of delay information from the core network element, where each piece of delay information includes a transmission delay between the terminal device and one user plane network element. That the central control network element selects at least one edge network from the plurality of edge networks as the first edge network includes: The central control network element selects at least one edge network from the plurality of edge networks as the first edge network based on at least the plurality of pieces of delay information. That the central control network element selects at least one network element from network elements included in the plurality of edge networks as the first network element includes: The central control network element selects at least one network element from the network elements included in the plurality of edge networks as the first network element based on at least the plurality of pieces of delay information. In this embodiment of this application, the central control network element selects the first edge network from the plurality of edge networks based on at least the delay information, or may select, based on at least the delay information, the first network element from the network elements included in the plurality of edge networks. In this case, the central control network element may send the connection information of the selected first network element to the terminal device, so that the terminal device can establish a connection with the first network element selected by the central control network element from the first edge network, thereby improving a success rate of establishing a connection by the terminal device with the edge network.

In a possible implementation, the control network element is a central control network element, one edge network corresponds to the user plane network element, and the one edge network corresponding to the user plane network element is the first edge network. That the control network element sends connection information of a first network element to the terminal device based on the first information includes: The central control network element selects at least one network element from network elements in the first edge network as the first network element; and the central control network element sends the connection information to the terminal device. In this embodiment of this application, the central control network element may select the first network element from the network elements included in the first edge network. In this case, the central control network element may send the connection information of the selected first network element to the terminal device, so that the terminal device can establish a connection with the first network element selected by the central control network element, thereby improving a success rate of establishing a connection by the terminal device with the edge network.

In a possible implementation, that the control network element sends connection information of a first network element to the terminal device includes: The control network element sends the connection information to the terminal device via the core network element. In this embodiment of this application, the terminal device may receive the connection information of the first network element via the core network element, so that the terminal device no longer uses a preconfigured manner to establish the connection, and the connection information of the first network element is generated based on the location of the terminal device, thereby improving a success rate of establishing a connection by the terminal device with the first network element in the first edge network.

In a possible implementation, the first network element includes at least one of the following: a first control network element in the first edge network and a first application network element in the first edge network.

In a possible implementation, the method further includes: After the terminal device establishes a connection with the first control network element, the first control network element sends application information of the first application network element to the terminal device. In this embodiment of this application, the terminal device receives the application information sent by the first control network element in the first edge network, the terminal device may parse the application information to determine the first application network element included in the first edge network to which the terminal device establishes a connection, and the terminal device may initiate an access request to the first application network element. In this way, the terminal device can complete an entire process of application discovery.

According to a second aspect, an embodiment of this application further provides a connection establishment method. The method includes: A core network element sends first information to at least one control network element, where the first information indicates that an edge network corresponding to a user plane network element serving a terminal device changes. The core network element receives connection information of a first network element sent by the at least one control network element, where the first network element is a network element in a first edge network corresponding to the user plane network element, and the connection information is used for the terminal device to connect to the first network element. The core network element sends the connection information of the first network element to the terminal device. In this embodiment of this application, the terminal device may obtain, from the control network element, the connection information of the first network element, and establish a connection between the terminal device and the first network element. The edge network does not need to be preconfigured for the terminal device provided in this embodiment of this application. The terminal device may establish the connection between the terminal device and the first network element based on the connection information of the first network element sent by the control network element. In this case, connection establishment is dynamically triggered based on a change of the edge network corresponding to the user plane network element, and a success rate of establishing a connection by the terminal device with the edge network is improved.

In a possible implementation, before that a core network element sends first information to at least one control network element, the method further includes: The core network element receives location request information sent by the at least one control network element, where the location request information requests the core network element to send the first information; or the core network element receives subscription request information sent by the control network element, where the subscription request information requests the core network element to send the first information when detecting that a location of the terminal device changes, the subscription request information requests the core network element to send the first information when detecting that the edge network corresponding to the user plane network element changes, or the subscription request information requests the core network element to send the first information when detecting that a user plane management event occurs. In this solution, the control network element may further send the subscription request information to the core network element, and the core network element receives the subscription request information sent by the at least one control network element. The core network element detects, based on the subscription request information, whether the location of the terminal device changes, detects whether the edge network corresponding to the user plane network element changes, or detects whether the user plane management event occurs. The core network element may send the first information when detecting that the location of the terminal device changes, send the first information when detecting that the edge network corresponding to the user plane network element changes, or send the first information when detecting that the user plane management event occurs. Therefore, the core network element may send the foregoing first information to the control network element by using the subscription request information sent by the control network element to the core network element, and the control network element may send the connection information of the first network element based on the first information, so that the terminal device is connected to the first edge network by using the connection information.

In a possible implementation, the first information further includes the location of the terminal device, and the location of the terminal device is used for the at least one control network element to determine the first edge network or determine the first network element. In this solution, service range information of a network element in the edge network is configured on the control network element. When the first information includes the location of the terminal device, the control network element determines that a network element whose service range includes the location of the terminal device is the first network element. The control network element determines the first edge network or determines the first network element based on at least the location of the terminal device. In other words, the control network element may determine, based on the location of the terminal device, the first edge network in a plurality of edge networks corresponding to a plurality of user plane network elements serving the terminal device. Alternatively, the control network element may determine, based on the location of the terminal device, the first network element in network elements in a plurality of edge networks.

In a possible implementation, the at least one control network element includes a central control network element; a plurality of edge networks correspond to the user plane network element; the first edge network is at least one edge network selected by the central control network element from the plurality of edge networks; or the first network element is at least one network element selected by the central control network element from network elements included in the plurality of edge networks. In this embodiment of this application, the central control network element may select the first edge network from the plurality of edge networks, or may select the first network element from the network elements included in the plurality of edge networks. In this case, the central control network element may send the connection information of the selected first network element to the terminal device, so that the terminal device can establish a connection with the first network element selected by the central control network element from the first edge network, thereby improving a success rate of establishing a connection by the terminal device with the edge network.

In a possible implementation, the method further includes: The core network element receives delay information from a plurality of user plane network elements, where each piece of delay information includes a transmission delay between the terminal device and one user plane network element. The core network element sends, to the central control network element, the delay information from the plurality of user plane network elements, where the delay information is used for the central control network element to: select at least one edge network from the plurality of edge networks as the first edge network, or select at least one network element from network elements included in the plurality of edge networks as the first network element. In this embodiment of this application, the central control network element selects the first edge network from the plurality of edge networks based on at least the delay information, or may select, based on at least the delay information, the first network element from the network elements included in the plurality of edge networks. In this case, the central control network element may send the connection information of the selected first network element to the terminal device, so that the terminal device can establish a connection with the first network element selected by the central control network element from the first edge network, thereby improving a success rate of establishing a connection by the terminal device with the edge network.

In a possible implementation, the method further includes: The core network element receives indication information sent by the at least one control network element, where the indication information indicates the core network element to send the connection information to the terminal device. In this embodiment of this application, the at least one control network element may send the connection information of the first network element to the terminal device via the core network element. For example, the control network element sends the connection information of the first network element to the core network element, where the connection information of the first network element further includes indication information, and the core network element sends the connection information of the first network element to the terminal device based on the indication information. In this embodiment of this application, the indication information enables the core network element to send the connection information of the first network element to the terminal device, so that the terminal device can receive the connection information of the first network element via the core network element.

According to a third aspect, an embodiment of this application further provides a connection establishment method. The method includes: A terminal device receives, from a control network element, connection information of a first network element, where the first network element is a network element in a first edge network corresponding to a user plane network element serving the terminal device. The terminal device establishes a connection between the terminal device and the first network element based on the connection information. In this embodiment of this application, the terminal device may obtain, from the control network element, the connection information of the first network element, and establish a connection between the terminal device and the first network element. The edge network does not need to be preconfigured for the terminal device provided in this embodiment of this application. The terminal device may establish the connection between the terminal device and the first network element based on the connection information of the first network element sent by the control network element. In this case, connection establishment is dynamically triggered based on a change of the edge network corresponding to the user plane network element, and a success rate of establishing a connection by the terminal device with the edge network is improved.

In a possible implementation, a plurality of edge networks correspond to the user plane network element. That the terminal device establishes a connection between the terminal device and the first network element based on the connection information includes: The terminal device selects at least one edge network from the plurality of edge networks as the first edge network, or the terminal device selects at least one network element from network elements included in the plurality of edge networks as the first network element. The terminal device establishes a connection between the terminal device and the first network element based on the connection information.

In a possible implementation, the method further includes: The terminal device receives delay information of a plurality of user plane network elements sent by the core network element, where each piece of delay information includes a transmission delay between the terminal device and one user plane network element. That the terminal device selects at least one edge network from the plurality of edge networks as the first edge network includes: The terminal device selects at least one edge network from the plurality of edge networks as the first edge network based on at least the delay information. That the terminal device selects at least one network element from network elements included in the plurality of edge networks as the first network element includes: The terminal device selects at least one network element from the network elements included in the plurality of edge networks as the first network element based on at least the delay information.

In a possible implementation, the first network element includes at least one of the following: a first control network element in the first edge network and a first application network element in the first edge network.

In a possible implementation, the method further includes: After the terminal device establishes a connection with the first control network element, the terminal device receives application information that corresponds to the first application network element and that is sent by the first control network element; and the terminal device sends an access request to the first application network element. In this embodiment of this application, the terminal device receives the application information sent by the first control network element in the first edge network, the terminal device may parse the application information to determine the first application network element included in the first edge network to which the terminal device establishes a connection, and the terminal device may initiate an access request to the first application network element. In this way, the terminal device can complete an entire process of application discovery.

According to a fourth aspect, an embodiment of this application further provides a connection establishment method. The method includes: A core network element sends first information to at least one control network element, where the first information indicates that an edge network corresponding to a user plane network element serving a terminal device changes. The at least one control network element sends connection information of a first network element to the terminal device based on the first information, where the first network element is a network element in a first edge network corresponding to the user plane network element. After receiving the connection information of the first network element, the terminal device establishes a connection between the terminal device and the first network element based on the connection information. In this embodiment of this application, the terminal device may obtain, from the control network element, the connection information of the first network element, and establish a connection between the terminal device and the first network element. The edge network does not need to be preconfigured for the terminal device provided in this embodiment of this application. The terminal device may establish the connection between the terminal device and the first network element based on the connection information of the first network element sent by the control network element. In this case, connection establishment is dynamically triggered based on a change of the edge network corresponding to the user plane network element, and a success rate of establishing a connection by the terminal device with the edge network is improved.

In a possible implementation, before that a core network element sends first information to at least one control network element, the method further includes: The at least one control network element sends subscription request information to the core network element, where the subscription request information requests the core network element to send the first information when detecting that a location of the terminal device changes, the subscription request information requests the core network element to send the first information when detecting that the edge network corresponding to the user plane network element changes, or the subscription request information requests the core network element to send the first information when detecting that a user plane management event occurs. In this solution, the control network element may further send the subscription request information to the core network element, and the core network element receives the subscription request information sent by the at least one control network element. The core network element detects, based on the subscription request information, whether the location of the terminal device changes, detects whether the edge network corresponding to the user plane network element changes, or detects whether the user plane management event occurs. The core network element may send the first information when detecting that the location of the terminal device changes, send the first information when detecting that the edge network corresponding to the user plane network element changes, or send the first information when detecting that the user plane management event occurs. Therefore, the core network element may send the foregoing first information to the control network element by using the subscription request information sent by the control network element to the core network element, and the control network element may send the connection information of the first network element based on the first information, so that the terminal device is connected to the first edge network by using the connection information.

In a possible implementation, the first information further includes the location of the terminal device. The method further includes: The at least one control network element determines the first edge network or determines the first network element based on at least the location of the terminal device. In this solution, service range information of a network element in the edge network is configured on the control network element. When the first information includes the location of the terminal device, the control network element determines that a network element whose service range includes the location of the terminal device is the first network element. The control network element determines the first edge network or determines the first network element based on at least the location of the terminal device. In other words, the control network element may determine, based on the location of the terminal device, the first edge network in a plurality of edge networks corresponding to a plurality of user plane network elements serving the terminal device. Alternatively, the control network element may determine, based on the location of the terminal device, the first network element in network elements in a plurality of edge networks.

In a possible implementation, the at least one control network element is a central control network element, and a plurality of edge networks correspond to the user plane network element. That the at least one control network element sends connection information of a first network element to the terminal device based on the first information includes: The central control network element selects at least one edge network from the plurality of edge networks as the first edge network, or the central control network element selects at least one network element from network elements included in the plurality of edge networks as the first network element; and the central control network element sends the connection information to the terminal device. In this embodiment of this application, the central control network element may select the first edge network from the plurality of edge networks, or may select the first network element from the network elements included in the plurality of edge networks. In this case, the central control network element may send the connection information of the selected first network element to the terminal device, so that the terminal device can establish a connection with the first network element selected by the central control network element from the first edge network, thereby improving a success rate of establishing a connection by the terminal device with the edge network.

In a possible implementation, the method further includes: The central control network element receives a plurality of pieces of delay information from the core network element, where each piece of delay information includes a transmission delay between the terminal device and one user plane network element. That the central control network element selects at least one edge network from the plurality of edge networks as the first edge network includes: The central control network element selects at least one edge network from the plurality of edge networks as the first edge network based on at least the plurality of pieces of delay information. That the central control network element selects at least one network element from network elements included in the plurality of edge networks as the first network element includes: The central control network element selects at least one network element from the network elements included in the plurality of edge networks as the first network element based on at least the plurality of pieces of delay information. In this embodiment of this application, the central control network element selects the first edge network from the plurality of edge networks based on at least the delay information, or may select, based on at least the delay information, the first network element from the network elements included in the plurality of edge networks. In this case, the central control network element may send the connection information of the selected first network element to the terminal device, so that the terminal device can establish a connection with the first network element selected by the central control network element from the first edge network, thereby improving a success rate of establishing a connection by the terminal device with the edge network.

In a possible implementation, the at least one control network element is a central control network element, one edge network corresponds to the user plane network element, and the one edge network corresponding to the user plane network element is the first edge network. That the at least one control network element sends connection information of a first network element to the terminal device based on the first information includes: The central control network element selects at least one network element from network elements in the first edge network as the first network element; and the central control network element sends the connection information to the terminal device. In this embodiment of this application, the central control network element may select the first network element from the network elements included in the first edge network. In this case, the central control network element may send the connection information of the selected first network element to the terminal device, so that the terminal device can establish a connection with the first network element selected by the central control network element, thereby improving a success rate of establishing a connection by the terminal device with the edge network.

In a possible implementation, that the at least one control network element sends connection information of a first network element to the terminal device includes: The at least one control network element sends the connection information to the terminal device via the core network element. In this embodiment of this application, the terminal device may receive the connection information of the first network element via the core network element, so that the terminal device no longer uses a preconfigured manner to establish the connection, and the connection information of the first network element is generated based on the location of the terminal device, thereby improving a success rate of establishing a connection by the terminal device with the first network element in the first edge network.

In a possible implementation, the first network element includes at least one of the following: a first control network element in the first edge network and a first application network element in the first edge network.

In a possible implementation, the method further includes: After the terminal device establishes a connection with the first control network element, the at least one control network element sends application information of the first application network element to the terminal device. In this embodiment of this application, the terminal device receives the application information sent by the first control network element in the first edge network, the terminal device may parse the application information to determine the first application network element included in the first edge network to which the terminal device establishes a connection, and the terminal device may initiate an access request to the first application network element. In this way, the terminal device can complete an entire process of application discovery.

According to a fifth aspect, an embodiment of this application further provides a connection establishment method. The method includes: A control network element receives first information from a first core network element, where the first information indicates a location of a terminal device. The control network element sends connection information of a first network element to the terminal device based on the first information, where the first network element is a network element in a first edge network corresponding to a user plane network element serving the terminal device, and the connection information is used for the terminal device to connect to the first network element. In this embodiment of this application, the terminal device may obtain connection information of the control network element in at least one edge network from the connection information of the first network element, and establish a connection between the terminal device and the first network element based on the connection information. The edge network does not need to be preconfigured for the terminal device in this embodiment of this application. The terminal device may establish the connection between the terminal device and the first network element based on the connection information that is of the first network element and that is determined by the control network element. In this case, connection establishment is dynamically triggered based on the location of the terminal device, and a success rate of establishing a connection between the terminal device and the edge network is improved.

In a possible implementation, before that a control network element receives first information from a first core network element, the method further includes: The control network element sends location request information to the first core network element, where the location request information requests the first core network element to send the first information. Alternatively, the control network element sends subscription request information to the first core network element, where the subscription request information requests the first core network element to send the first information when detecting that the location of the terminal device changes, the subscription request information requests the first core network element to send the first information when detecting that the edge network corresponding to the user plane network element changes, or the subscription request information requests the core network element to send the first information when detecting that a user plane management event occurs. In this solution, the control network element may further send the subscription request information to the core network element, and the core network element receives the subscription request information sent by the at least one control network element. The core network element detects, based on the subscription request information, whether the location of the terminal device changes, detects whether the edge network corresponding to the user plane network element changes, or detects whether the user plane management event occurs. The core network element may send the first information when detecting that the location of the terminal device changes, send the first information when detecting that the edge network corresponding to the user plane network element changes, or send the first information when detecting that the user plane management event occurs. Therefore, the core network element may send the foregoing first information to the control network element by using the subscription request information sent by the control network element to the core network element, and the control network element may send the connection information of the first network element based on the first information, so that the terminal device is connected to the first edge network by using the connection information.

In a possible implementation, a plurality of edge networks correspond to the user plane network element. After the control network element receives the first information from the first core network element, the method further includes: The control network element selects at least one edge network from the plurality of edge networks as the first edge network based on at least the location of the terminal device; or the control network element selects, based on at least the location of the terminal device, at least one network element from network elements included in the plurality of edge networks as the first network element.

In a possible implementation, that the control network element sends connection information of a first network element to the terminal device based on the first information includes: The control network element sends the connection information to the terminal device based on the first information by using a second core network element. In this embodiment of this application, after receiving the connection information of the first network element sent by the control network element, the first core network element sends the connection information of the first network element to the second core network element, and the second core network element sends the connection information of the first network element to the terminal device. In this way, the terminal device can receive the connection information by using the second core network element.

In a possible implementation, the first network element includes at least one of the following: a first control network element in the first edge network and a first application network element in the first edge network.

In a possible implementation, the method further includes: After the terminal device establishes a connection with the first control network element, the first control network element sends application information of the first application network element to the terminal device. In this embodiment of this application, the terminal device receives the application information sent by the first control network element in the first edge network, the terminal device may parse the application information to determine the first application network element included in the first edge network to which the terminal device establishes a connection, and the terminal device may initiate an access request to the first application network element. In this way, the terminal device can complete an entire process of application discovery.

According to a sixth aspect, an embodiment of this application further provides a connection establishment method. The method includes: A first core network element sends first information to a control network element, where the first information indicates a location of a terminal device. The control network element receives the first information from the first core network element. The control network element sends connection information of a first network element to the terminal device based on the first information, where the first network element is a network element in a first edge network corresponding to a user plane network element serving the terminal device, and the connection information is used for the terminal device to connect to the first network element. The terminal device receives the connection information of the first network element. The terminal device establishes a connection between the terminal device and the first network element based on the connection information. In this embodiment of this application, the terminal device may obtain connection information of the control network element in at least one edge network from the connection information of the first network element, and establish a connection between the terminal device and the first network element based on the connection information. The edge network does not need to be preconfigured for the terminal device in this embodiment of this application. The terminal device may establish the connection between the terminal device and the first network element based on the connection information that is of the first network element and that is determined by the control network element. In this case, connection establishment is dynamically triggered based on the location of the terminal device, and a success rate of establishing a connection between the terminal device and the edge network is improved.

According to a seventh aspect, an embodiment of this application provides a communication apparatus. The communication apparatus is specifically a control network element. The control network element is configured to perform the method according to the first aspect or the fifth aspect.

According to an eighth aspect, an embodiment of this application provides a communication apparatus. The communication apparatus is specifically a core network element. The core network element is configured to perform the method according to any implementation of the second aspect.

According to a ninth aspect, an embodiment of this application provides a communication apparatus. The communication apparatus may be a chip or a terminal device. The chip or the terminal device is configured to perform the method according to any implementation of the third aspect.

In the seventh aspect, the eighth aspect, or the ninth aspect of this application, composition modules of the communication apparatus may further perform the steps described in the first aspect, the second aspect, the third aspect, the fifth aspect, and the possible implementations thereof. For details, refer to the descriptions in the first aspect, the second aspect, the third aspect, the fifth aspect, and the possible implementations thereof.

According to a tenth aspect, an embodiment of this application provides a communication system. The communication system includes a control network element, a core network element, and a terminal device. The control network element is configured to perform the method performed by the control network element in the fourth aspect. The core network element is configured to perform the method performed by the core network element in the fourth aspect. The terminal device is configured to perform the method performed by the terminal device in the fourth aspect.

In a possible implementation, the communication system further includes at least one of the following: a user plane network element and an application network element.

According to an eleventh aspect, an embodiment of this application provides a communication system. The communication system includes a control network element, a first core network element, and a terminal device. The control network element is configured to perform the method performed by the control network element in the sixth aspect. The first core network element is configured to perform the method performed by the first core network element in the sixth aspect. The terminal device is configured to perform the method performed by the terminal device in the sixth aspect.

In a possible implementation, the communication system further includes at least one of the following: a second core network element, a user plane network element, and an application network element.

According to a twelfth aspect, an embodiment of this application provides a computer-readable storage medium. The computer-readable storage medium stores instructions. When the instructions run on a computer, the computer is enabled to perform the method according to any one of the first aspect, the second aspect, the third aspect, the fourth aspect, the fifth aspect, or the sixth aspect.

According to a thirteenth aspect, an embodiment of this application provides a computer program product including instructions. When the computer program product runs on a computer, the computer is enabled to perform the method according to any one of the first aspect, the second aspect, the third aspect, the fourth aspect, the fifth aspect, or the sixth aspect.

According to a fourteenth aspect, an embodiment of this application provides a communication apparatus. The communication apparatus may include an entity such as a control network element, a core network element, and a terminal device or a chip. The communication apparatus includes a processor, and optionally, further includes a memory. The memory is configured to store instructions. The processor is configured to execute the instructions in the memory, to enable the communication apparatus to perform the method according to any one of the first aspect, the second aspect, the third aspect, the fourth aspect, the fifth aspect, or the sixth aspect.

According to a fifteenth aspect, this application provides a chip system. The chip system includes a processor and is configured to support a control network element, a core network element, and a terminal device in implementing functions in the foregoing aspects, for example, sending or processing data and/or information in the foregoing methods. In a possible design, the chip system further includes a memory. The memory is configured to store program instructions and data that are necessary for the control network element, the core network element, and the terminal device. The chip system may include a chip, or may include a chip and another discrete component.

### BRIEF DESCRIPTION OF DRAWINGS

FIG. 1a is a schematic structural composition diagram of a communication system according to an embodiment of this application;
FIG. 1b is a schematic structural composition diagram of another communication system according to an embodiment of this application;
FIG. 1c is a schematic structural composition diagram of another communication system according to an embodiment of this application;
FIG. 2 is a schematic flowchart of interaction between a control network element, a core network element, and a terminal device in a connection establishment method according to an embodiment of this application;
FIG. 3a is a schematic structural composition diagram of another communication system according to an embodiment of this application;
FIG. 3b is a schematic structural composition diagram of another communication system according to an embodiment of this application;
FIG. 4 is a schematic flowchart of interaction between a control network element, a first core network element, and a terminal device in a connection establishment method according to an embodiment of this application;
FIG. 5a is a schematic diagram of an application scenario of a communication system according to an embodiment of this application;
FIG. 5b is a schematic diagram of another application scenario of a communication system according to an embodiment of this application;
FIG. 6 is a schematic flowchart of interaction between a plurality of network elements in a communication system according to an embodiment of this application;
FIG. 7 is a schematic flowchart of interaction between a plurality of network elements in a communication system according to an embodiment of this application;
FIG. 8 is a schematic flowchart of interaction between a plurality of network elements in a communication system according to an embodiment of this application;
FIG. 9 is a schematic structural composition diagram of a control network element according to an embodiment of this application;
FIG. 10 is a schematic structural composition diagram of a core network element according to an embodiment of this application;
FIG. 11 is a schematic structural composition diagram of a terminal device according to an embodiment of this application;
FIG. 12 is a schematic structural composition diagram of a control network element according to an embodiment of this application;
FIG. 13 is a schematic structural composition diagram of a core network element according to an embodiment of this application; and
FIG. 14 is a schematic structural composition diagram of a terminal device according to an embodiment of this application.

### DESCRIPTION OF EMBODIMENTS

Embodiments of this application provide a connection establishment method, a communication apparatus, and a system, to improve a success rate of establishing a connection by a terminal device with an edge network.

The following describes embodiments of this application with reference to the accompanying drawings.

In the specification, claims, and accompanying drawings of this application, the terms "first", "second", and so on are intended to distinguish between similar objects but do not necessarily indicate a specific order or sequence. It should be understood that the terms used in such a way are interchangeable in proper circumstances, which is merely a discrimination manner that is used when objects having a same attribute are described in embodiments of this application. In addition, the terms "include", "contain" and any other variants mean to cover the non-exclusive inclusion, so that a process, method, system, product, or device that includes a series of units is not necessarily limited to those units, but may include other units not expressly listed or inherent to such a process, method, system, product, or device.

The technical solutions in embodiments of this application may be applied to various communication systems for data processing. The technical solutions provided in this application may be applied to various communication systems, for example, a long term evolution (long term evolution, LTE) system, a 5th generation (5th generation, 5G) communication system, and another similar communication system. In addition, the communication systems may be further used in future-oriented communication technologies, and are all used in the technical solutions provided in embodiments of this application. The system architecture and the service scenario described in embodiments of this application are intended to describe the technical solutions in embodiments of this application more clearly, and do not constitute a limitation on the technical solutions provided in embodiments of this application. A person skilled in the art may know that: With the evolution of the network architecture and the emergence of new service scenarios, the technical solutions provided in embodiments of this application are also applicable to similar technical problems.

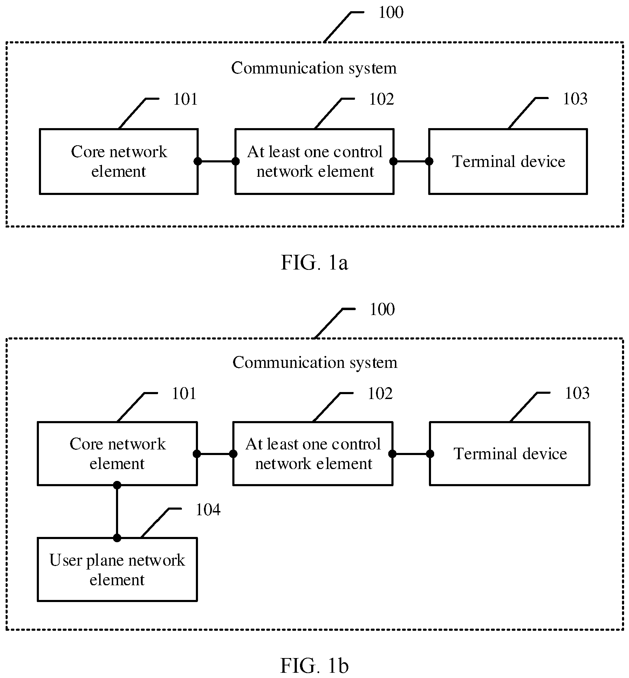

FIG. 1a is a schematic structural composition diagram of a communication system according to an embodiment of this application. The communication system 100 provided in this embodiment of this application includes a core network element 101, at least one control network element 102, and a terminal device 103.

The core network element 101 is configured to send first information to at least one control network element 102, where the first information indicates that an edge network corresponding to a user plane network element serving the terminal device 103 changes.

The at least one control network element 102 is configured to send connection information of a first network element to the terminal device 103 based on the first information, where the first network element is a network element in a first edge network corresponding to the user plane network element, and the connection information is used for the terminal device to connect to the first network element.

The terminal device 103 is configured to establish a connection between the terminal device and the first network element based on the connection information of the first network element.

The core network element 101 may separately communicate with the control network element 102 and the terminal device 103. For example, the core network element 101 directly communicates with the control network element 102, or indirectly communicates with the control network element 102 by using another network element in the communication system. Details are not limited herein. For another example, the core network element 101 directly communicates with the terminal device 103, or indirectly communicates with the terminal device 103 by using another network element in the communication system. Details are not limited herein. Optionally, in this embodiment of this application, the core network element 101 has a function of obtaining a location of the terminal device. For example, the core network element 101 obtains the location of the terminal device from a network element that implements an access and mobility management function (access and mobility management function, AMF). The core network element 101 may further determine, based on the location of the terminal device, whether the edge network corresponding to the user plane network element serving the terminal device changes. When the edge network corresponding to the user plane network element serving the terminal device changes, the core network element 101 generates the first information, and sends the first information to the control network element 102.

Optionally, the core network element 101 may further receive, from the control network element 102, the connection information of the first network element, and send the connection information of the first network element to the terminal device 103. There are a plurality of implementations for the core network element 101. For example, the core network element 101 may be a network element that implements a session management function (session management function, SMF). For another example, the core network element 101 may be specifically a network element that implements a policy control function (policy control function, PCF) in a core data center. For another example, the core network element 101 may be specifically a network element that implements a network exposure function (network exposure function, NEF), and can expose a capability of the core network element to the control network element 102. Another core network element may communicate with the control network element 102 by using the NEF. A specific implementation of the core network element 101 may be determined with reference to an application scenario. Details are not limited herein.

The communication system includes at least one control network element 102. The control network element 102 may communicate with the core network element 101 and the terminal device 103. For example, the control network element 102 directly communicates with the core network element 101, or indirectly communicates with the core network element 101 by using another network element in the communication system. Details are not limited herein. For another example, the control network element 102 directly communicates with the terminal device 103, or indirectly communicates with the terminal device 103 by using another network element in the communication system. Details are not limited herein. In this embodiment of this application, the communication system may include one or more control network elements 102. The control network element 102 has a function of obtaining the connection information of the first network element, and communicates with the core network element 101. There are a plurality of implementations for the control network element 102. For example, the control network element 102 may be an application function network element (application function, AF) in an edge data center. In the 3rd generation partnership project (3rd generation partnership project,3GPP) system architecture (system and architecture, SA) 2, an application function network element or an application server deployed in a data center is uniformly referred to as an AF, and includes but is not limited to a control plane application network element (such as an edge enabler server (edge enabler server, EES) or a mobile edge computing platform (mobile edge computing platform, MEP)), a user plane application network element (such as various application servers (application servers) or edge application servers (edge application servers, EASs)). For example, the control network element 102 included in the communication system may be a central control network element (also referred to as a central control network element) independent of the edge data center. For example, the central control network element may be an edge configuration server (edge configuration server, ECS) or various application server controllers (application server controllers). The central control network element may interact with the control network element 102 in the local data center. A specific implementation of the control network element 102 may be determined with reference to an application scenario. Details are not limited herein. It may be understood that there is no thorough difference between the control network element and the central control network element in the edge network. For example, in a specific case, the central control network element may be deployed in an edge network. For example, the central control network element may be deployed in a central data network. This is not limited in this embodiment of this application.

The terminal device 103 included in the communication system may receive, from the control network element 102, the connection information of the first network element, and then the terminal device 103 establishes the connection between the terminal device and the first network element. The terminal device 103 is a device that can provide information, voice, and/or data connectivity for a user, and may also be referred to as user equipment (user equipment, UE), a mobile station (mobile station, MS), a mobile terminal (mobile terminal, MT), or the like. Currently, for example, the terminal device 103 includes a mobile phone (mobile phone), a tablet computer, a notebook computer, a palmtop computer, a mobile internet device (mobile internet device, MID), a wearable device, a virtual reality (virtual reality, VR) device, an augmented reality (augmented reality, AR) device, a wireless terminal in industrial control (industrial control), a wireless terminal in self driving (self driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), and a vehicle-mounted device. A related function of the terminal device 103 may be implemented by using a chip, and steps performed by the terminal device in all the embodiments of this application may be performed by the chip.

In this embodiment of this application, an edge network is deployed at the edge of a data network. For example, the edge network may be an environment (edge hosting environment, EHE) or a data center (data center, DC) of an edge application. The EHE may also be referred to as an edge data network (edge data network, EDN). In the following embodiment, an example in which the edge network is the EDN is used for description. A control network element may be deployed in the edge network. The control network element in the edge network is used for the terminal device to connect to the edge network. For example, when the edge network is an EDN, the control network element in the edge network may be an EES. For example, when the edge network is an edge data center, the control network element in the edge network may be an MEP. An application network element may be further deployed in the edge network. The application network element in the edge network may be used for the terminal device to connect to the edge network. The application network element may be further configured to provide application information for the terminal device. For example, when the edge network is an EDN, the application network element may be an EAS.

In this embodiment of this application, the first edge network is one or more corresponding edge networks serving the terminal device, the first edge network is specifically an edge network that the terminal device can be connected to, and the first edge network may also be referred to as a target edge network. The first edge network may be configured to be connected to the terminal device. For example, the first edge network may include the first network element. Specifically, the terminal device may establish a connection with the first network element. The first network element may be one or more network elements in the first edge network. There are a plurality of specific implementations for the first network element. For example, the first network element includes at least one of the following: a first control network element in the first edge network and a first application network element in the first edge network. In other words, the first network element may be a control network element, or the first network element may be an application network element.

In this embodiment of this application, the connection information of the first network element may be used for the terminal device to connect to the first network element. The connection information may be an internet protocol (internet protocol, IP) address of the first network element, or a unique identifier of the first network element. Details are not limited herein. In addition, the connection information of the first network element sent by the control network element 102 may be carried in edge network information for sending.

In some embodiments of this application, as shown in FIG. 1b, the communication system 100 may further include a user plane network element 104. The user plane network element 104 is configured to serve the terminal device 103. The user plane network element 104 is disposed between the terminal device 103 and the edge network. For example, one user plane network element 104 is disposed between the terminal device 103 and each of a plurality of edge networks. The user plane network element 104 is configured to send delay information to the core network element 101. If there are a plurality of user plane network elements 104, each user plane network element may send one piece of delay information to the core network element 101, and the core network element 101 may receive a plurality of pieces of delay information. Each piece of delay information includes a transmission delay between the terminal device 103 and one user plane network element 104. For example, the user plane network element 104 may be specifically a network element that implements a user plane function (user plane function, UPF). Specifically, the user plane network element 104 may be located in a local data center (local data center) or close to the local data center. The user plane network element 104 may also be referred to as a local protocol data unit anchor (local PDU session anchor, L-PSA). For example, the user plane network element 104 may support all or some of the following functions: interconnecting a protocol data unit (protocol data unit, PDU) session with a data network, packet routing and transfer (for example, supporting transfer of traffic to the data network after uplink classification), and data packet detection. For example, the user plane network element 104 may further measure a transmission delay between the terminal device and the user plane network element.

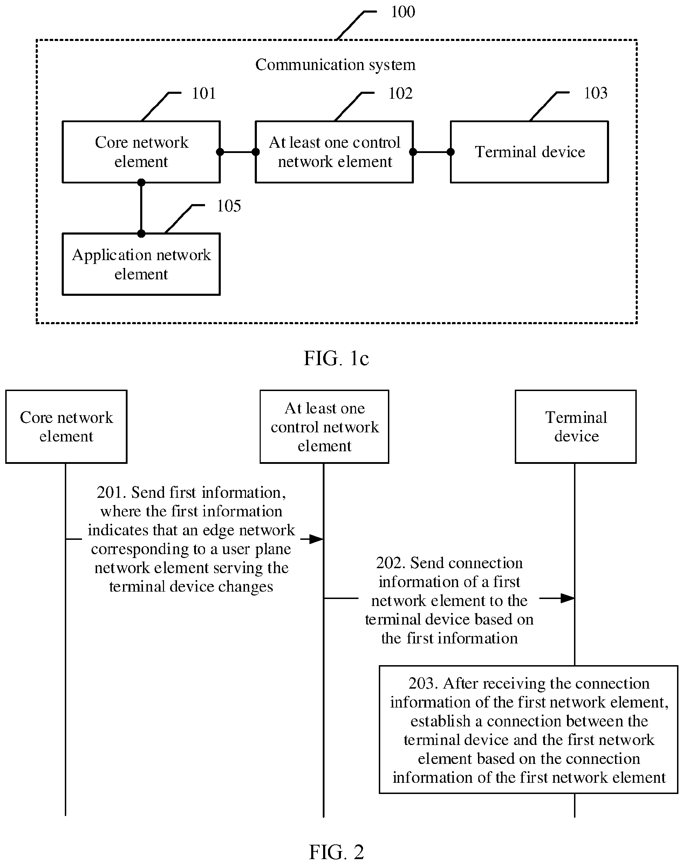

In some embodiments of this application, as shown in FIG. 1c, the communication system 100 may further include an application network element 105. After the connection between the terminal device 103 and the first network element is established, the terminal device 103 receives application information of the application network element 105, the terminal device sends an access request to the application network element 105 based on the application information, and the application network element 105 is configured to receive the access request sent by the terminal device. For example, the application network element 105 may be the first application network element in the first edge network.

The foregoing embodiment describes the communication system provided in this application. The following describes a connection establishment method performed based on the communication system. Referring to FIG. 2, the connection establishment method provided in an embodiment of this application mainly includes the following steps.

201. A core network element sends first information to at least one control network element, where the first information indicates that an edge network corresponding to a user plane network element serving a terminal device changes.

The first information may be specifically a notification message sent by the core network element to the at least one control network element. For example, the notification message may be specifically a data network access identifier (data network access identifier, DNAI) change message (change notification) or a user plane management event notification message (user plane management event notification).

It may be understood that the first information indicates that the edge network corresponding to the user plane network element serving the terminal device changes. Alternatively, it may be understood that the first information indicates that the user plane network element (for example, a UPF) serving a session of the terminal device changes or a user plane path of a session of the terminal device changes. Alternatively, that the first information indicates that the edge network corresponding to the user plane network element serving the terminal device changes may be understood as: After the terminal device moves, an edge network that the terminal device may access changes. For example, a specific form or an information name of the first information is not limited in this embodiment of this application. In an implementation, a user plane path between each user plane network element (for example, a UPF) and an edge network has a unique DNAI identifier. When a user plane network element serving UE changes, an edge network that may provide a service for the terminal device may change. In another implementation, there may be N user plane network elements (for example, UPFs), and the N user plane network elements all correspond to a same edge network. In other words, the N UPFs serve one edge network, and a value of N may be a positive integer. The user plane path between each UPF and the edge network has a different DNAI identifier. When the user plane network element serving the UE changes, the edge network that may provide a service for the terminal device may not change. Before the core network element sends the first information to the at least one control network element, the control network element sends subscription request information to the core network element, where the subscription request information requests the core network element to send the first information when detecting that a user plane management event occurs. Correspondingly, the first information indicates that the user plane management event occurs.

Optionally, the first information further includes a location of the terminal device. In an implementation, the core network element sends a DNAI change notification or a user plane management event notification message (user plane management event notification) to the at least one control network element, where the notification message further carries the location of the terminal device. The location of the terminal device may be represented in a plurality of manners. The location of the terminal device may include a DNAI identifier that indicates an identifier of a path between an edge network and the user plane network element serving the terminal device, or include a list of candidates and available DNAIs adjacent to the terminal device (where the list of DANIs indicates the control network element to determine an appropriate edge network or determine information about an appropriate control network element). Alternatively, the location of the terminal device may be specific UE location information, for example, a tracking area identity (tracking area identity, TAI) and a cell identifier (Cell ID). The control network element may determine, based on the location of the terminal device, connection information to be sent to the terminal device. In an implementation, a user plane path between each user plane network element (for example, a UPF) and an edge network has a unique DNAI identifier. After receiving a DNAI identifier, the control network element may determine that an edge network corresponding to the DNAI identifier is an edge network currently most suitable for serving the UE. Therefore, the control network element sends connection information of a first network element to the terminal device. The first network element is a network element in the edge network corresponding to the DNAI identifier.

It may be understood that "the edge network corresponding to the user plane network element serving the terminal device changes" may be "one edge network corresponding to one user plane network element serving the terminal device changes", or "a plurality of edge networks corresponding to a plurality of user plane network elements serving the terminal device change".

In this embodiment of this application, the core network element may obtain the location of the terminal device. For example, the core network element obtains the location of the terminal device from an AMF. The core network element determines, based on the location of the terminal device, whether the edge network corresponding to the user plane network element serving the terminal device changes. For example, the terminal device moves, and a location to which the terminal device moves may not be within a service range of the edge network currently corresponding to the user plane network element serving the terminal device. In this case, the core network element determines that the edge network corresponding to the user plane network element serving the terminal device changes. The core network element generates first information. The first information indicates that the edge network corresponding to the user plane network element serving the terminal device changes. For example, the first information may be data network access identifier (data network access identifier, DNAI) update (change) information, and may be specifically a DNAI change notification. The DNAI change information indicates that a DNAI change event occurs. Alternatively, the core network element determines that a user plane network element (for example, a UPF) serving a current session of the terminal device changes, and determines that a DNAI corresponding to the user plane network element changes. The first information may be a user plane management event notification, and the user plane management event notification may carry a changed DNAI. Alternatively, the core network element (for example, an SMF) may detect whether a user plane path of the terminal device changes. For example, when detecting that an event such as a local UPF is dynamically inserted or an anchor UPF is switched occurs, the core network element (SMF) sends first information. The first information indicates that the user plane path of the terminal device changes. The first information may be specifically a notification message, for example, a user plane management event notification. Optionally, the first information may further include a DNAI identifier that indicates an identifier of a path between the edge network and the user plane network element serving the terminal. Alternatively, the notification message includes a list of candidate and available DNAIs adjacent to the terminal, indicating the control network element to select an appropriate edge network or determine information about an appropriate control network element. Alternatively, the notification message includes specific UE location information, such as a TAI and a Cell ID.

After generating the first information, the core network element sends the first information to the at least one control network element, so that the at least one control network element may receive the first information from the core network element. For implementations of the core network element and the control network element, refer to the detailed descriptions in the foregoing embodiments. Details are not described herein again.

In some embodiments of this application, before step 201 in which the core network element sends the first information to the at least one control network element, the method provided in this embodiment of this application further includes:

The control network element sends subscription request information to the core network element, where the subscription request information requests the core network element to send the first information when detecting that the location of the terminal device changes, the subscription request information requests the core network element to send the first information when detecting that the edge network corresponding to the user plane network element changes, or the subscription request information requests the core network element to send the first information when detecting that the user plane management event occurs.

In some embodiments of this application, before step 201 in which the core network element sends the first information to the at least one control network element, the method further includes:

The core network element receives location request information sent by the at least one control network element, where the location request information requests the core network element to send the location of the terminal device; or
the core network element receives subscription request information sent by the control network element, where the subscription request information requests the core network element to send the first information when detecting that the location of the terminal device changes, the subscription request information requests the core network element to send the first information when detecting that the edge network corresponding to the user plane network element changes, or the subscription request information requests the core network element to send the first information when detecting that the user plane management event occurs.

Specifically, the core network element may receive the location request information sent by the control network element. The core network element may determine, based on the location of the terminal device, whether the edge network corresponding to the user plane network element serving the terminal device changes, and send the first information when the edge network corresponding to the user plane network element serving the terminal device changes.

The control network element may further send the subscription request information to the core network element, and the core network element receives the subscription request information sent by the at least one control network element. The core network element detects, based on the subscription request information, whether the location of the terminal device changes, detects whether the edge network corresponding to the user plane network element changes, or detects whether the user plane management event occurs. The core network element may send the first information when detecting that the location of the terminal device changes, send the first information when detecting that the edge network corresponding to the user plane network element changes, or send the first information when detecting that the user plane management event occurs. The at least one control network element that receives the first information may be an AF, or may be an EES, an ECS, an MEP, or the like. For example, the at least one control network element subscribes to the DNAI change (change) event or the user plane management (user plane management) event from the core network element. When detecting that the DNAI change event or the user plane management event occurs, the core network element sends DNAI change information to the control network element, so that the control network element can obtain an access location of the terminal device. Optionally, the first information further includes a DNAI identifier, or the first information includes a list (list) of potentially candidate DNAIs. The list of DNAIs includes one or more DNAI identifiers.

202. The at least one control network element sends the connection information of the first network element to the terminal device based on the first information, where the first network element is a network element in a first edge network corresponding to the user plane network element.

In this embodiment of this application, the at least one control network element receives the first information, and determines, based on the first information, that the edge network corresponding to the user plane network element serving the terminal device changes, or determines, based on the first information, that the user plane management event of the terminal device occurs. The at least one control network element obtains the connection information of the first network element. The at least one control network element may send the connection information of the first network element to the terminal device. For example, the control network element sends the connection information of the first network element to the terminal device by using a user plane path or an application layer-based method, or the control network element sends the connection information of the first network element to the terminal device via the core network element.

The control network element stores or configures information about one or more edge networks, and the control network element may also obtain information about an edge network from another network element. The first edge network refers to an edge network that is determined by the control network element and notified to the terminal device. The first edge network may also be referred to as a target edge network. In an implementation, the control network element has information about N edge networks, and the control network element determines to send information about M edge networks or some information about the M edge networks to the terminal device. M is less than or equal to N, and M is greater than or equal to 0. A network element in the first edge network may be configured to be connected to the terminal device. For example, the first edge network may include a first network element. Specifically, the terminal device may establish a connection with the first network element. The first network element may be one or more network elements in the first edge network. There are a plurality of specific implementations for the first network element. For example, the first network element includes at least one of the following: a first control network element in the first edge network and a first application network element in the first edge network. In other words, the first network element may be a control network element, for example, the first network element may be an EES, or the first network element may be an application network element, for example, the first network element may be an EAS.

It should be noted that the first edge network and the first network element may be in an inclusion relationship, for example, the first edge network includes the first network element; or the first edge network and the first network element may be in an association relationship, for example, a first network element can serve a plurality of first edge networks.

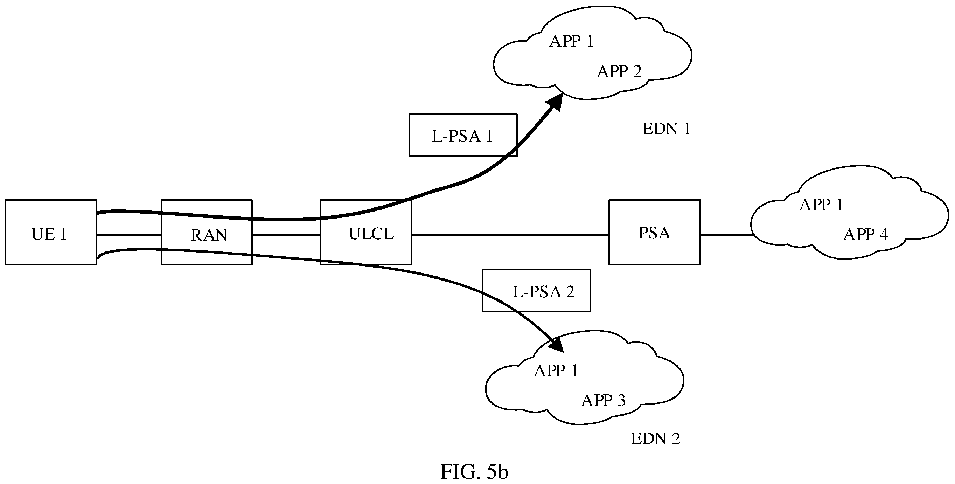

In an implementation, the user plane network element corresponds to the first edge network, and the user plane network element is a user plane network element that is serving the terminal device. For example, in FIG. 5b, L-PSA 1 corresponds to EDN 1, and L-PSA 2 corresponds to EDN 2. When detecting that L-PSA 1 or L-PSA 2 is inserted, the core network element sends the first information to the control network element. After receiving the first information, the control network element delivers, to the terminal device, connection information of a network element in EDN 1 corresponding to L-PSA 1 and/or connection information of a network element in EDN 2 corresponding to L-PSA 2.

In another implementation, the user plane network element corresponds to the first edge network, and the user plane network element is a user plane network element that has not served the terminal device. For example, information about an edge network, EDN 3, is configured on the control network element. EDN 3 may be served by PSA 3, and an association relationship between PSA 3 and EDN 3 may be identified by using a DNAI. As shown in FIG. 5b, the terminal device is not served by PSA 3. When detecting that L-PSA 1 or L-PSA 2 is inserted, the core network element sends the first information to the control network element. After receiving the first information, the control network element may deliver, to the terminal device, connection information of a network element in EDN 3 corresponding to PSA 3.

In this embodiment of this application, the connection information of the first network element may be used for the terminal device to connect to the first network element. The connection information may be but is not limited to the following information of the first network element: an IP address, a uniform resource locator (uniform resource identifier, URI), a uniform resource locator (uniform resource locator, URL), a fully qualified domain name (fully qualified domain name, FQDN), and an identifier of the first network element. For example, the identifier of the first network element may include an EAS ID.

In an implementation, the connection information of the first network element may include connection information of the first control network element in the first edge network corresponding to the user plane network element serving the terminal device, and the connection information of the first control network element is used for the terminal device to establish a connection with the first control network element. In another implementation, the connection information of the first network element includes connection information of the first application network element in the first edge network corresponding to the user plane network element serving the terminal device, and the connection information of the first application network element is used for the terminal device to establish a connection with the first application network element. The connection information of the first application network element may specifically include an address (for example, an IP address, a URI, or a URL) of the first application network element, identification information of the first application network element, an FQDN of the first application network element, or the like.

It should be noted that, in this embodiment of this application, "the terminal device establishes a connection with an edge network" may be "the terminal device establishes a connection with a control network element in the edge network", or "the terminal device establishes a connection with an application network element in the edge network".

In some embodiments of this application, in addition to performing the foregoing method, the core network element may further perform the following step in the connection establishment method provided in this embodiment of this application.

The core network element receives indication information sent by the at least one control network element, where the indication information indicates the core network element to send the connection information of the first network element to the terminal device.

The at least one control network element may send the connection information of the first network element to the terminal device via the core network element. For example, the control network element sends the connection information of the first network element to the core network element, where the connection information of the first network element further includes indication information, and the core network element sends the connection information of the first network element to the terminal device based on the indication information. In this embodiment of this application, the indication information enables the core network element to send the connection information of the first network element to the terminal device, so that the terminal device can receive the connection information of the first network element via the core network element.

For example, to indicate the core network element to send the connection information of the first network element to the terminal device, the at least one control network element may include one piece of indication information in the connection information of the first network element. For example, the indication information may be carried in a specific field in the connection information of the first network element. For example, the indication information is carried in a reserved field in the connection information of the first network element, or the indication information is carried in a new field obtained through extension in a message sent to the core network element. That is, the connection information of the first network element may include the indication information. The connection information of the first network element and the indication information may alternatively be two pieces of information. A specific implementation is not limited herein.

In some embodiments of this application, the connection information of the first network element further includes service range information of the first edge network.

The service range information of the first edge network indicates the terminal device to establish a connection with the first network element in the first edge network when the terminal device is in a service range of the first edge network.

Specifically, the service range information of the first edge network includes the service range of the first edge network. After receiving the connection information of the first network element, the terminal device may obtain the service range information of the first edge network from the connection information of the first network element. In this way, the terminal device may establish a connection with the control network element in the first edge network when the terminal device is in the service range of the first edge network. It may be understood that the terminal device does not establish a connection with the first network element in the first edge network when the terminal device is not within the service range of the first edge network.

In some embodiments of this application, the first information further includes a location of the terminal device. The location of the terminal device is used for the at least one control network element to determine the first edge network or determine the first network element.

The connection establishment method provided in this embodiment of this application further includes:

The control network element determines the first edge network or determines the first network element based on at least the location of the terminal device.

The core network element sends the first information to the at least one control network element, and the first information may further include the location of the terminal device. In this case, the control network element may obtain the location of the terminal device by using the first information. The location of the terminal device may be represented in a plurality of manners. The location of the terminal device may include a DNAI identifier that indicates an identifier of a path between an edge network and the user plane network element serving the terminal, or include a list of candidate and available DNAIs adjacent to the terminal, where the list of DNAIs indicates the control network element to determine an appropriate edge network or determine information about an appropriate control network element. Alternatively, the location of the terminal device may be specific UE location information, for example, a TAI and a Cell ID. The control network element may determine, based on the location information, connection information to be sent to the terminal device. In an implementation, a user plane path between each user plane network element (for example, a UPF) and an edge network has a unique DNAI identifier. After receiving one or more DNAI identifiers, the control network element may determine that an edge network corresponding to the DNAI identifier is an edge network currently most suitable for serving the UE, that is, determine that an edge network corresponding to the DNAI identifier is a first network. The first network element is a network element in the edge network corresponding to the DNAI identifier. The control network element sends the connection information of the first network element to the terminal device. In another implementation, service range information of the edge network is configured on the control network element. When the first information includes the location of the terminal device, the control network element determines that an edge network whose service range information includes the location of the terminal device is the first edge network, and the first network element is a network element in the first edge network. In another implementation, service range information of a network element in the edge network is configured on the control network element. When the first information includes the location of the terminal device, the control network element determines that a network element whose service range includes the location of the terminal device is the first network element. The control network element determines the first edge network or determines the first network element based on at least the location of the terminal device. In other words, the control network element may determine, based on the location of the terminal device, the first edge network in a plurality of edge networks corresponding to a plurality of user plane network elements serving the terminal device. Alternatively, the control network element may determine, based on the location of the terminal device, the first network element in network elements in a plurality of edge networks. In this embodiment of this application, the control network element may first determine the first edge network based on the location of the terminal device, and then determine the first network element in the first edge network. Details are not limited. Alternatively, the control network element may directly determine the first network element in network elements in a plurality of edge networks. For example, if a plurality of edge networks corresponding to a plurality of UPFs serving the terminal device include a plurality of EESs, and each EES has a corresponding service range, the control network element may determine the first network element in the plurality of EESs based on the location of the terminal device.

In some embodiments of this application, the at least one control network element is a central control network element; a plurality of edge networks correspond to the user plane network element; the first edge network is at least one edge network selected by the central control network element from the plurality of edge networks; or the first network element is at least one network element selected by the central control network element from network elements included in the plurality of edge networks.

Step 202 in which the at least one control network element sends the connection information of the first network element to the terminal device based on the first information includes:
A1. The central control network element selects at least one edge network from the plurality of edge networks as the first edge network.
A2. Alternatively, the central control network element selects at least one network element from network elements included in the plurality of edge networks as the first network element.
A3. The central control network element sends the connection information to the terminal device.

A central control network element may be disposed in the communication system. The central control network element may be independent of a control network element in each edge network. In addition, the central control network element may interact with the core network element, and the central control network element may further interact with the control network element in each edge network. For example, the central control network element may be an ECS or a globally management controller AF.

In this embodiment of this application, after the central control network element receives the first information, the central control network element may determine, for the terminal device, an edge network to which a connection needs to be established. The edge network to which a connection needs to be established is referred to as the first edge network. A plurality of edge networks corresponds to the user plane network element. For example, the central control network element may select M (M≤N, M≥1) edge networks from N edge networks as the first edge networks. M may be equal to 1, and in this case, one first edge network is selected from the N edge networks. Alternatively, M may be greater than 1, and in this case, a plurality of first edge networks are selected from the N edge networks. In the following embodiment, an example in which the central control network element selects at least one edge network from the plurality of edge networks as the first edge network is used for description.

In this embodiment of this application, the central control network element may select the first edge network from the plurality of edge networks, or may select the first network element from the network elements included in the plurality of edge networks. In this case, the central control network element may send the connection information of the selected first network element to the terminal device, so that the terminal device can establish a connection with the first network element selected by the central control network element from the first edge network, thereby improving a success rate of establishing a connection by the terminal device with the edge network.

It should be noted that, in this embodiment of this application, the central control network element may select at least one edge network from a plurality of edge networks as the first edge network by using a preset edge network selection policy. The edge network selection policy may include a plurality of implementations. For example, the edge network selection policy may be determined based on a delay of a transmission channel, or the edge network selection policy is determined based on load of an edge network. For example, the edge network selection policy may be determined based on a DNAI, and service range information of an EDN. Details are not limited. The edge network selection policy may be further used to select the first network element. Details are not limited.

Further, in some embodiments of this application, the connection establishment method performed by the core network element may further include the following steps:

The core network element receives delay information from a plurality of user plane network elements, where each piece of delay information includes a transmission delay between the terminal device and one user plane network element.

The core network element sends, to the central control network element, the delay information from the plurality of user plane network elements, where the delay information is used for the central control network element to: select at least one edge network from the plurality of edge networks as the first edge network, or select at least one network element from network elements included in the plurality of edge networks as the first network element.

In the foregoing implementation scenario in which step A1 to step A3 are performed, the connection establishment method provided in this embodiment of this application may include the following steps.

B1. The central control network element receives a plurality of pieces of delay information from the core network element, where each piece of delay information includes a transmission delay between the terminal device and one user plane network element.

As shown in FIG. 1b, the communication system 100 may further include a user plane network element 104. The user plane network element 104 is configured to serve the terminal device 103. The user plane network element 104 is disposed between the terminal device 103 and the edge network. For example, one user plane network element 104 is disposed between the terminal device 103 and each of a plurality of edge networks. Each user plane network element may be configured to measure a delay corresponding to a transmission channel between the terminal device and the user plane network element. For example, the user plane network element is an L-PSA, and the transmission channel between the terminal device and the user plane network element includes: UE-radio access network (radio access network, RAN), RAN-uplink classifier (uplink classifier, ULCL), and ULCL-L-PSA. Each user plane network element may send delay information to the core network element, the core network element may receive a plurality of pieces of delay information, and then the core network element sends the plurality of pieces of delay information to the central control network element.

Step A1 in which the central control network element selects at least one edge network from the plurality of edge networks as the first edge network includes: The central control network element selects at least one edge network from the plurality of edge networks as the first edge network based on at least a plurality of pieces of delay information.

Alternatively, step A2 in which the central control network element selects at least one network element from network elements included in the plurality of edge networks as the first network element includes: The central control network element selects at least one network element from the network elements included in the plurality of edge networks as the first network element based on at least the plurality of pieces of delay information.

The core network element may communicate with the central control network element. For example, the core network element may establish a communication connection with the central control network element, and the core network element receives the plurality of pieces of delay information by using the communication connection. The central control network element selects at least one edge network from the plurality of edge networks as the first edge network based on at least the plurality of pieces of delay information, or selects at least one network element from the network elements included in the plurality of edge networks as the first network element. For example, the central control network element may determine the first edge network or the first network element based on a plurality of pieces of delay information. Alternatively, the central control network element may determine the first edge network or the first network element based on a plurality of pieces of delay information and the location of the terminal device. A manner of determining the first edge network or the first network element may depend on the edge network selection policy used by the central control network element. For example, the central control network element may select an edge network corresponding to a transmission path with a minimum delay as the first edge network, or the central control network element may select a network element in an edge network corresponding to a transmission path with a minimum delay as the first network element.

In this embodiment of this application, the central control network element selects the first edge network from the plurality of edge networks based on at least the delay information, or may select, based on at least the delay information, the first network element from the network elements included in the plurality of edge networks. In this case, the central control network element may send the connection information of the selected first network element to the terminal device, so that the terminal device can establish a connection with the first network element selected by the central control network element from the first edge network, thereby improving a success rate of establishing a connection by the terminal device with the edge network.

In this embodiment of this application, in addition to determining the first edge network or the first network element based on the delay information, the central control network element may further determine the first edge network or the first network element based on an edge network load balancing policy. Details are not limited. Alternatively, the central control network element determines the first edge network or the first network element based on both the delay information and the edge network load balancing policy. A manner of selecting the first edge network and the first network element is not limited.

In this embodiment of this application, after determining the first edge network, the central control network element may determine the first network element in the first edge network, and then the central control network element may send the connection information of the first network element to the terminal device. For example, the connection information of the first network element includes the connection information of the first control network element and/or the first application network element. For example, the central control network element stores connection information of a control network element and/or an application network element in each edge network. The central control network element may obtain the connection information of the first control network element and/or the first application network element based on the locally stored connection information of the control network element and/or the application network element. For another example, the central control network element may communicate with a control network element in each edge network. After determining the first edge network, the central control network element communicates with the first control network element in the first edge network, to obtain the connection information of the first control network element and/or the first application network element.

In some embodiments of this application, the at least one control network element is a central control network element, one edge network corresponds to the user plane network element, and the one edge network corresponding to the user plane network element is the first edge network.

Step 202 in which the at least one control network element sends the connection information of the first network element to the terminal device based on the first information includes:
The central control network element selects at least one network element from network elements in the first edge network as the first network element.
The central control network element sends the connection information to the terminal device.

A central control network element may be disposed in the communication system. The central control network element may be independent of a control network element in an edge network. In addition, the central control network element may interact with the core network element, and the central control network element may further interact with the control network element in the edge network. For example, the central control network element may be an ECS or a globally management controller AF.

In this embodiment of this application, after the central control network element receives the first information, the central control network element may determine, for the terminal device, an edge network to which a connection needs to be established. The edge network to which a connection needs to be established is referred to as the first edge network. One edge network corresponds to the user plane network element. For example, the central control network element may select T network elements from S network elements in an edge network as the first network element. T may be equal to 1, and in this case, one first network element is selected from the S network elements. Alternatively, T may be greater than 1, and in this case, a plurality of first network elements are selected from the S network elements. In the following embodiment, an example in which the central control network element selects at least one network element from the first edge network as the first network element is used for description.

In this embodiment of this application, the central control network element may select the first network element from the network elements included in the first edge network. In this case, the central control network element may send the connection information of the selected first network element to the terminal device, so that the terminal device can establish a connection with the first network element selected by the central control network element, thereby improving a success rate of establishing a connection by the terminal device with the edge network.

It should be noted that, in this embodiment of this application, the central control network element may select at least one network element from a plurality of network elements in the first edge network as the first network element by using a preset network element selection policy. The network element selection policy may include a plurality of implementations. For example, the network element selection policy may be determined based on a delay of a transmission channel. For example, the network element selection policy may be determined based on a DNAI, and service range information of an EDN. Details are not limited.

In some embodiments of this application, step 202 in which the at least one control network element sends the connection information of the first network element to the terminal device based on the first information includes:

The first control network element in the first edge network sends the connection information of the first network element to the terminal device, where the first network element includes a first control network element and/or a first application network element.

The communication system may include a plurality of control network elements, the plurality of control network elements respectively belong to different edge networks, and a control network element in each edge network sends connection information of a network element in the edge network to the core network element. In this case, the terminal device may receive the connection information from the plurality of control network elements. For example, the communication system includes a plurality of first control network elements, the first control network element sends, to the terminal device, connection information of a first network element in a first edge network corresponding to the first control network element, and the first network element includes the first control network element and/or a first application network element. The terminal device may receive connection information of first network elements in a plurality of first edge networks corresponding to a plurality of first control network elements. The terminal device may select a first edge network from a plurality of first edge networks corresponding to the plurality of first control network elements, and then establish a connection with a first network element in the selected first edge network.

In some embodiments of this application, step 202 in which the at least one control network element sends the connection information of the first network element to the terminal device based on the first information includes:
C1. The at least one control network element sends the connection information of the first network element to the core network element.
C2. The core network element receives the connection information of the first network element sent by the at least one control network element, where the first network element is a network element in the first edge network corresponding to the user plane network element, and the connection information is used for the terminal device to connect to the first network element.
C3. The core network element sends the connection information of the first network element to the terminal device.

In this embodiment of this application, the communication system may include at least one control network element. The control network element in the edge network sends, to the core network element, the connection information of the first network element in the first edge network corresponding to the control network element. In this case, the core network element may receive, from the control network element, the connection information of the first network element, and the core network element may send the connection information of the first network element to the terminal device, so that the terminal device can receive, from the core network element, the connection information of the first network element.

203. After receiving the connection information of the first network element, the terminal device establishes a connection between the terminal device and the first network element based on the connection information of the first network element.

The terminal device may receive the connection information of the first network element from the at least one control network element. Alternatively, the terminal device may establish a communication connection with the core network element, and the terminal device may receive the connection information of the first network element via the core network element. For example, the terminal device may establish a control plane connection (for example, non-access stratum (non-access stratum, NAS) signaling) or a user plane connection (between the UE and the UPF) with the core network element.

In this embodiment of this application, the terminal device may communicate with the core network element, the terminal device may receive the connection information of the first network element from the core network element, the terminal device determines, based on the connection information of the first network element, the first network element to which a connection needs to be established, and the terminal device establishes the connection with the first network element. In this way, a process of establishing a connection between the terminal device and the edge network is completed. In this embodiment of this application, the terminal device may receive the connection information of the first network element, so that the terminal device no longer uses a preconfigured manner to establish the foregoing connection. In addition, the connection information of the first network element is generated based on the location of the terminal device, so that a success rate of establishing the connection between the terminal device and the first network element in the first edge network is improved.

In some embodiments of this application, a plurality of edge networks correspond to the user plane network element.

Step 203 in which the terminal device establishes a connection between the terminal device and the first network element based on the connection information includes:
D1. The terminal device selects at least one edge network from the plurality of edge networks as the first edge network.
D2. The terminal device selects at least one network element from network elements included in the plurality of edge networks as the first network element.
D3. The terminal device establishes the connection between the terminal device and the first network element based on the connection information.

A terminal device may be disposed in the communication system. The terminal device may interact with the core network element, and the terminal device may further interact with a control network element in each edge network. In this embodiment of this application, after the terminal device receives connection information of a plurality of first network elements, the terminal device may determine the first edge network to which the terminal device needs to establish a connection. A plurality of edge networks correspond to the user plane network element. For example, the terminal device may select M (M≤N, M≥1) edge networks from N edge networks as the first edge networks. M may be equal to 1, and in this case, one first edge network is selected from the N edge networks. Alternatively, M may be greater than 1, and in this case, a plurality of first edge networks are selected from the N edge networks. In the following embodiment, an example in which the terminal device selects at least one edge network from the plurality of edge networks as the first edge network is used for description.

In this embodiment of this application, the terminal device may select the first edge network from the plurality of edge networks, or may select the first network element from the network elements included in the plurality of edge networks, so that the terminal device can establish a connection with the first network element selected by the terminal device from the first edge network, thereby improving a success rate of establishing a connection by the terminal device with the edge network.

It should be noted that, in this embodiment of this application, the terminal device may select at least one edge network from a plurality of edge networks as the first edge network by using a preset edge network selection policy. The edge network selection policy may include a plurality of implementations. For example, the edge network selection policy may be determined based on a delay of a transmission channel, or the edge network selection policy is determined based on load of an edge network. For example, the edge network selection policy may be determined based on a DNAI, and service range information of an EDN. Details are not limited. The edge network selection policy may be further used to select the first network element. Details are not limited.

In the foregoing implementation scenario in which step D1 and step D2 are performed, the connection establishment method provided in this embodiment of this application may include the following steps.

E1. The terminal device receives delay information of a plurality of user plane network elements sent by the core network element, where each piece of delay information includes a transmission delay between the terminal device and one user plane network element.

Step D1 in which the terminal device selects at least one edge network from the plurality of edge networks as the first edge network includes: The terminal device selects at least one edge network from the plurality of edge networks as the first edge network based on at least the delay information.

Step D2 in which the terminal device selects at least one network element from network elements included in the plurality of edge networks as the first network element includes: The terminal device selects at least one network element from the network elements included in the plurality of edge networks as the first network element based on at least the delay information.

The delay information is used for the terminal device to: select at least one edge network from the plurality of edge networks as the first edge network, or select at least one network element from network elements included in the plurality of edge networks as the first network element.

In this embodiment of this application, in addition to determining the first edge network or the first network element based on the delay information, the terminal device may further determine the first edge network or the first network element based on the edge network load balancing policy, or determine the first edge network or the first network element based on both the delay information and the edge network load balancing policy. A manner of selecting the first edge network and the first network element is not limited.

In this embodiment of this application, the terminal device selects the first edge network from the plurality of edge networks based on at least the delay information, or selects, based on at least the delay information, the first network element from the network elements included in the plurality of edge networks, so that the terminal device can establish a connection with the first network element selected by the terminal device from the first edge network, thereby improving a success rate of establishing a connection by the terminal device with the edge network.

In some embodiments of this application, the connection establishment method provided in this embodiment of this application further includes: The at least one control network element sends routing information to the user plane network element via the core network element.

The routing information indicates the user plane network element to send a data packet from the terminal device to an edge network corresponding to the user plane network element. The user plane network element sends, based on the routing information, the data packet from the terminal device to the edge network corresponding to the user plane network element. In this embodiment of this application, the routing information sent by the network element may be controlled, so that the data packet from the terminal device can be automatically forwarded, and a transmission path of the data packet does not need to be indicated by using separate signaling, thereby reducing overheads.

In some embodiments of this application, as shown in FIG. 1c, an application network element 105 is included. After the connection between the terminal device 103 and the first network element is established, the terminal device 103 receives application information of the application network element 105, the terminal device sends an access request to the application network element 105 based on the application information, and the application network element 105 is configured to receive the access request sent by the terminal device. For example, the application network element 105 may be the first application network element in the first edge network. The connection establishment method provided in this embodiment of this application further includes the following steps:
After the terminal device establishes a connection with the first control network element, the first control network element sends application information of the first application network element to the terminal device.

The terminal device receives the application information corresponding to the first application network element sent by the first control network element.

The terminal device sends an access request to the first application network element.

In this embodiment of this application, the first edge network may include one or more application network elements, and each application network element may send application information of the application network element to the first control network element in the first edge network. The terminal device establishes a connection with the first control network element in the first edge network. For example, the terminal device establishes a connection with the first control network element, and the first control network element may obtain the application information corresponding to the first application network element in the first edge network. The application information may include an application function supported by the first application network element. For example, the application information may include information about whether the first application network element supports migration, and load of the first application network element. For another example, the terminal device establishes a connection with the first control network element, and the central control network element may obtain the application information corresponding to the first application network element in the first edge network. The application information may include an application function supported by the first application network element.

The terminal device receives the application information sent by the first control network element in the first edge network, the terminal device may parse the application information to determine the first application network element included in the first edge network to which the terminal device establishes a connection, and the terminal device may initiate an access request to the first application network element. In this way, the terminal device can complete an entire process of application discovery.

It can be learned from the foregoing descriptions of this embodiment of this application that the core network element sends the first information to the control network element, where the first information indicates that the edge network corresponding to the user plane network element serving the terminal device changes. The control network element determines, based on the first information, that the edge network corresponding to the user plane network element serving the terminal device changes. The control network element may send the connection information of the first network element to the terminal device. The first network element is a network element in the first edge network corresponding to the user plane network element. The terminal device may obtain, from the control network element, the connection information of the first network element, and establish a connection between the terminal device and the first network element. The edge network does not need to be preconfigured for the terminal device provided in this embodiment of this application. The terminal device may establish the connection between the terminal device and the first network element based on the connection information of the first network element sent by the control network element. In this case, connection establishment is dynamically triggered based on a change of the edge network corresponding to the user plane network element, and a success rate of establishing a connection by the terminal device with the edge network is improved.

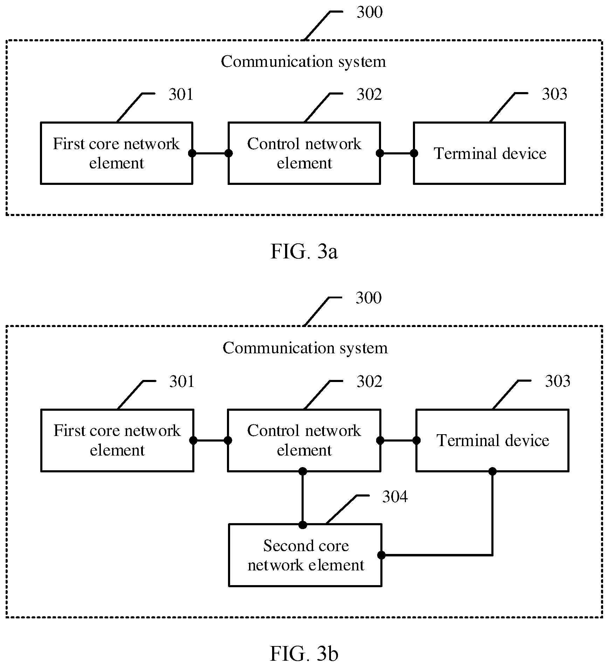

FIG. 3a is a schematic structural composition diagram of a communication system according to an embodiment of this application. The communication system 300 provided in this embodiment of this application includes a first core network element 301, a control network element 302, and a terminal device 303.

The first core network element 301 is configured to send first information to the control network element 302, where the first information indicates a location of the terminal device 303.

The first information may be UE location information, one or more DNAIs corresponding to a UPF serving the UE, or the like.

In an implementation, before the control network element receives the first information from the first core network element, the control network element sends location request information to the first core network element. The location request information requests the first core network element to send the location of the terminal device. For example, before the first core network element 301 sends the first information to the control network element 302, the control network element 302 sends the location request information to the first core network element 301 to request the location of the terminal device 303. Correspondingly, the first core network element 301 replies to the control network element 302 with the first information. The first information includes the UE location information.

In another implementation, the control network element sends subscription request information to the first core network element, where the subscription request information requests the first core network element to send the first information when detecting that the location of the terminal device changes, the subscription request information requests the first core network element to send the first information when detecting that an edge network corresponding to a user plane network element changes, or the subscription request information requests the core network element to send the first information when detecting that a user plane management event occurs. For example, before the first core network element 301 sends the first information to the control network element 302, the control network element 302 sends the subscription request information to the first core network element 301, to subscribe to a DNAI change corresponding to the terminal device 303 or subscribe to a user plane path change of a session of the terminal device 303, and then sends the first information when the change occurs. Correspondingly, when the first core network element 301 detects the DNAI change corresponding to the terminal device 303 or the user plane path change of the session, the first core network element 301 replies to the control network element 302 with the first information. The first information includes one or more DNAIs corresponding to the UPF serving the UE. The first information may be included in a notification message.

The control network element 302 is configured to: receive the first information from the first core network element 301, and send connection information of a first network element to the terminal device 303 based on the first information, where the first network element is a network element in a first edge network corresponding to the user plane network element serving the terminal device, and the connection information is used for the terminal device to connect to the first network element.

The connection information of the first network element includes connection information of a first control network element and/or a first application network element in the first edge network corresponding to the user plane network element serving the terminal device 303, and the connection information is used for the terminal device 303 to connect to the first network element in the first edge network. A manner in which the control network element 302 determines one or more edge networks based on the first information is not limited. In an implementation, service range information corresponding to the edge network is configured in the control network element 302, where the service range information may be specific location information or a DNAI. When a service range of an edge network includes the first information, the control network element 302 determines that the edge network is the first edge network available for the terminal device 303, and sends the connection information of the first network element in the first edge network to the terminal device 303.

The terminal device 303 is configured to: receive, from the control network element 302, the connection information of the first network element, and establish a connection between the terminal device and the first network element based on the connection information of the first network element.

The first core network element 301 may communicate with the control network element 302. For example, the first core network element 301 directly communicates with the control network element 302, or indirectly communicates with the control network element 302 by using another network element in the communication system. Details are not limited herein. For example, the first core network element 301 may be specifically a network element that implements a network capability exposure (network exposure function, NEF), or may be an SMF. For example, the SMF directly or indirectly sends a notification message (where the notification message includes the first information, and the first information is one or more DNAIs) to the control network element 302 by using the NEF. Alternatively, the first core network element 301 is an AMF. The AMF directly or indirectly sends the UE location information to the control network element 302 by using the NEF.

The control network element 302 may separately communicate with the first core network element 301 and the terminal device 303. For example, the control network element 302 directly communicates with the first core network element 301, or indirectly communicates with the first core network element 301 by using another network element in the communication system. Details are not limited herein. For another example, the control network element 302 directly communicates with the terminal device 303, or indirectly communicates with the terminal device 303 by using another network element in the communication system. Details are not limited herein. The control network element 302 may be specifically a central control network element (also referred to as a central control network element). For example, the control network element 302 may be an ECS or an AF. For example, the AF may include one or more of an EES, the ECS, and an EAS. The central control network element may interact with an AF in a local data center. A specific implementation of the control network element 302 may be determined with reference to an application scenario. Details are not limited herein.

A function of the terminal device 303 is similar to that of the terminal device 103 in the foregoing embodiment. Details are not described herein again.

In some embodiments of this application, as shown in FIG. 3b, an embodiment of this application provides a communication system 300, and the communication system 300 further includes a second core network element 304.

The control network element 302 sends the connection information to the terminal device based on the first information by using the second core network element 304.

For example, the control network element sends the connection information of the first network element to the second core network element 304. Alternatively, after receiving the connection information of the first network element sent by the control network element, the first core network element sends the connection information of the first network element to the second core network element 304, and the second core network element 304 sends the connection information of the first network element to the terminal device 303.

Specifically, communication between the control network element 302 and the terminal device 303 may be completed by using the second core network element 304. For example, the second core network element 304 may be specifically an SMF network element, a PCF network element, or an AMF network element. Details are not limited herein.

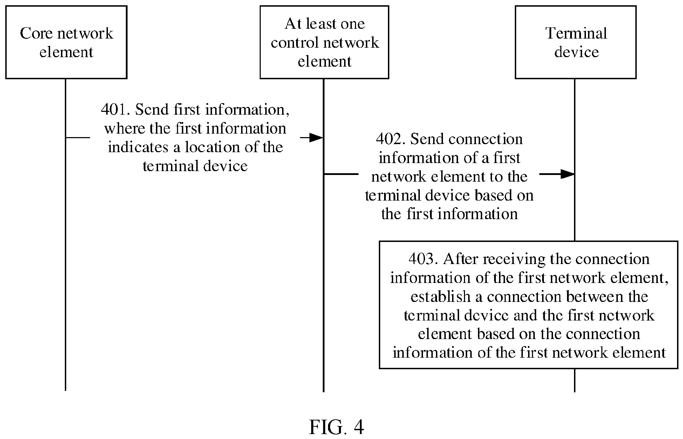

The foregoing embodiment describes the communication system provided in this application. The following describes a communication method performed based on the communication system. Referring to FIG. 4, a connection establishment method provided in an embodiment of this application mainly includes the following steps.

401. A first core network element sends first information to a control network element, where the first information indicates a location of a terminal device.

The first core network element may provide the location of the terminal device for the control network element. For example, the first core network element may actively send the first information to the control network element, where the first information indicates the location of the terminal device. The first information may be represented in a plurality of manners. The first information may include a DNAI identifier that indicates an identifier of a path between an edge network and a user plane network element serving the terminal, or include a list of candidate and available DNAIs adjacent to the terminal, where the list of DNAIs indicates the control network element to determine an appropriate edge network or determine information about an appropriate control network element. Alternatively, the first information may be specific UE location information, for example, a TAI or a Cell ID.

In some embodiments of this application, before step 401 in which the control network element receives the first information from the first core network element, the method provided in this embodiment of this application further includes the following step:
The control network element sends location request information to the first core network element, where the location request information requests the first core network element to send the first information.

The control network element may send the location request information to the first core network element when requiring the location of the terminal device. The first core network element sends the first information to the control network element based on the location request information. The first information indicates the location of the terminal device. In this embodiment of this application, the control network element may obtain the location of the terminal device based on a requirement of the control network element. For the control network element, this manner improves flexibility of obtaining the location of the terminal device.

402. The control network element receives the first information from the first core network element, and sends connection information of a first network element to the terminal device based on the first information.

In this embodiment of this application, the control network element receives the first information, and determines the location of the terminal device based on the first information. The control network element obtains the connection information of the first network element based on the location of the terminal device, and sends the connection information of the first network element to the terminal device based on the first information. The connection information of the first network element may specifically include an address of the first network element, a unique identifier of the first network element, or the like. The control network element may determine, based on the first information, the connection information of the first network element sent to the terminal device. In an implementation, a user plane path between each user plane network element (for example, a UPF) and an edge network has a unique DNAI identifier. After receiving one or more DNAI identifiers, the control network element may determine that an edge network corresponding to the DNAI identifier is an edge network currently most suitable for serving the UE, that is, determine that an edge network corresponding to the DNAI identifier is a first network. The first network element is a network element in the edge network corresponding to the DNAI identifier. The control network element sends the connection information of the first network element to the terminal device. In another implementation, service range information of the edge network is configured on the control network element. When the first information includes the location of the terminal device, the control network element determines that an edge network whose service range information includes the location of the terminal device is the first edge network, and the first network element is a network element in the first edge network. In another implementation, service range information of a network element in the edge network is configured on the control network element. When the first information includes the location of the terminal device, the control network element determines that a network element whose service range includes the location of the terminal device is the first network element.

403. The terminal device receives, from the control network element, the connection information of the first network element, and establishes a connection between the terminal device and the first network element based on the connection information of the first network element.

In this embodiment of this application, the terminal device may communicate with the control network element, the terminal device may receive, from the control network element, the connection information of the first network element, the terminal device may obtain, by parsing the connection information of the first network element, the connection information of the first network element in the first edge network corresponding to the user plane network element serving the terminal device, the terminal device determines, based on the connection information of the first network element, the first network element to which a connection needs to be established, and the terminal device establishes the connection with the first network element. In this way, a process of establishing a connection between the terminal device and the edge network is completed. In this embodiment of this application, the terminal device may receive the connection information of the first network element, so that the terminal device no longer uses a preconfigured manner to establish the foregoing connection. In addition, the connection information of the first network element is generated based on the location of the terminal device, so that a success rate of establishing the connection between the terminal device and the edge network is improved.

In some embodiments of this application, a plurality of edge networks correspond to the user plane network element.

After step 401 in which the control network element receives the first information from the first core network element, the method provided in this embodiment of this application further includes the following step:
The control network element selects at least one edge network from the plurality of edge networks as the first edge network based on at least the location of the terminal device.

Alternatively, the control network element selects at least one network element from network elements included in the plurality of edge networks as the first network element based on at least the location of the terminal device.

The core network element sends the first information to the control network element, and the first information may further include the location of the terminal device. In this case, the control network element may obtain the location of the terminal device by using the first information. For example, the location of the terminal device is a DNAI. The control network element determines the first edge network or determines the first network element based on at least the location of the terminal device. In other words, the control network element may determine, based on the location of the terminal device, the first edge network in a plurality of edge networks corresponding to a plurality of user plane network elements serving the terminal device. Alternatively, the control network element may determine, based on the location of the terminal device, the first network element in network elements in a plurality of edge networks. In this embodiment of this application, the control network element may first determine the first edge network based on the location of the terminal device, and then determine the first network element in the first edge network. Details are not limited. Alternatively, the control network element may directly determine the first network element in the network elements in the plurality of edge networks. For example, if a plurality of edge networks corresponding to a plurality of UPFs serving the terminal device include a plurality of EESs, the control network element may determine the first network element in the plurality of EESs.

The connection establishment method provided in this embodiment of this application further includes the following steps:
After the terminal device establishes a connection with the first control network element, the first control network element sends application information of the first application network element to the terminal device.

The terminal device receives the application information corresponding to the first application network element sent by the first control network element.

The terminal device sends an access request to the first application network element.

In this embodiment of this application, the first edge network may include one or more application network elements, and each application network element may send application information of the application network element to the first control network element in the first edge network. The terminal device establishes a connection with the first control network element in the first edge network. For example, the terminal device establishes a connection with the first control network element, and the first control network element may obtain the application information corresponding to the first application network element in the first edge network. The application information may include an application function supported by the first application network element. For example, the application information may include information about whether the first application network element supports migration, and load of the first application network element.

The terminal device receives the application information sent by the first control network element in the first edge network, the terminal device may parse the application information to determine the first application network element included in the first edge network to which the terminal device establishes a connection, and the terminal device may initiate an access request to the first application network element. In this way, the terminal device can complete an entire process of application discovery.

It can be learned from the foregoing descriptions of this embodiment of this application that the core network element sends the first information to the control network element, where the first information indicates the location of the terminal device, the control network element may obtain the location of the terminal device, and the control network element sends the connection information of the first network element to the terminal device based on the location of the terminal device. The connection information of the first network element includes connection information of a control network element in the edge network corresponding to the user plane network element serving the terminal device. The terminal device may obtain, from the connection information of the first network element, connection information of a control network element in at least one edge network, and establish the connection between the terminal device and the first network element based on the connection information. The edge network does not need to be preconfigured for the terminal device in this embodiment of this application. The terminal device may establish the connection between the terminal device and the first network element based on the connection information that is of the first network element and that is determined by the control network element. In this case, connection establishment is dynamically triggered based on the location of the terminal device, and a success rate of establishing a connection between the terminal device and the edge network is improved.

To better understand and implement the foregoing solutions in embodiments of this application, the following uses corresponding application scenarios as examples for specific description.

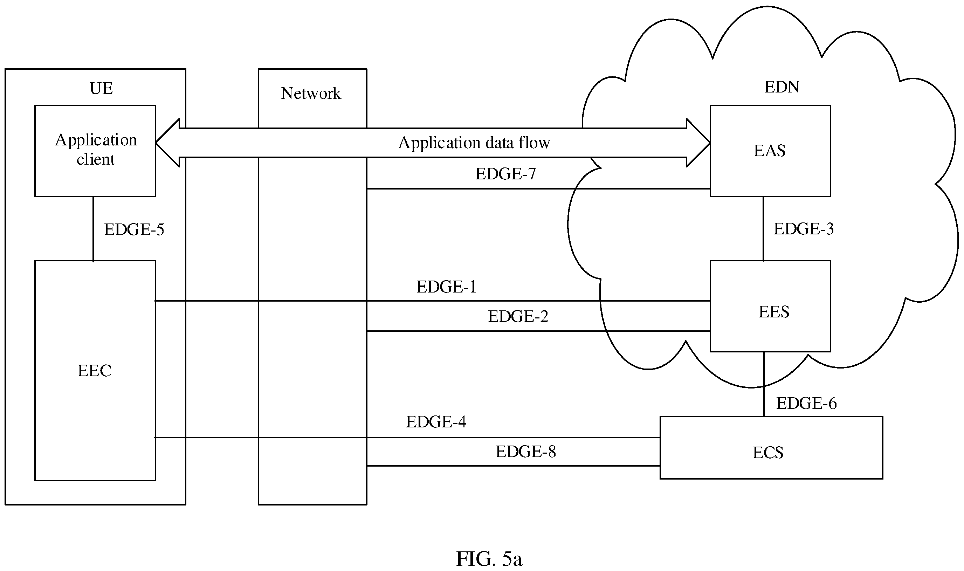

Based on the communication systems as shown in FIG. 1a to FIG. 1c, and FIG. 3a and FIG. 3b, the following describes different application scenarios of the communication systems by using examples. FIG. 5a and FIG. 5b show two specific application scenarios of the foregoing communication systems. In the following embodiment, an example in which an edge network is an EDN (or referred to as an EHE) is used for description. An implementation of the edge network as a data center is similar to this example.

As shown in FIG. 5a, an edge data network (edge data network, EDN) may be a local data center, and the EDN includes an edge enabler server (edge enabler server, EES) and a plurality of edge application servers (edge application servers, EASs). Each EDN has a specific service range. The EES may be a control network element (for example, an MEP) or a management network element in an MEC node, and is responsible for managing, for example, performing registration and DNS resolution on, each EAS deployed in the EDN. In addition, the EES may invoke a capability exposure function of a network (3gpp network).

An edge data network configuration server (edge data network configuration server, EDNCS) or an edge configuration server (edge configuration server, ECS) may be a global management network element that maintains information of each EDN such as a service range and an EES address. It should be noted that in some standard protocols such as technical specifications (technical specification, TS) 23.501 and TS 23.502, the foregoing EES, EAS, ECS, MEP, and the like may be referred to as AFs. Details are not described below again.

The UE may include an edge enabler client (edge enabler client, EEC) and an application client (application client). The EEC provides necessary support for the application client on the terminal. Functions of the EEC include: retrieving EDN information by using EDGE-4, enabling the UE to register with the EES, retrieving an available EAS, changing EAS availability, and notifying the EEC of EAS migration.

Specifically, in FIG. 5a, EDGE-1 indicates that the UE obtains an available application (EAS) in the EDN, EDGE-2 indicates network capability exposure invoking, EDGE-3 indicates that the EAS registers with the EES, EDGE-4 indicates that information about an available EDN is provided for the UE based on a location of the UE and an EDN service range, EDGE-6 indicates that the EDN registers with the EDNCS, EDGE-7 indicates that the EAS communicates with the 3GPP network, and EDGE-8 indicates that the EDNCS (ECS for short) communicates with the network.

As shown in FIG. 5b, at a location, the UE may have a plurality of available EDNs, for example, EDN 1 and EDN 2 in FIG. 5b, used for accessing. It is assumed that each EDN is accessed by using a specific local anchor UPF, for example, an L-PSA (local PDU session anchor) in FIG. 5b, and a central network is accessed by using a central local anchor UPF. A PSA in FIG. 5b is specifically a central (central) PSA. A ULCL and the L-PSA may be co-deployed.

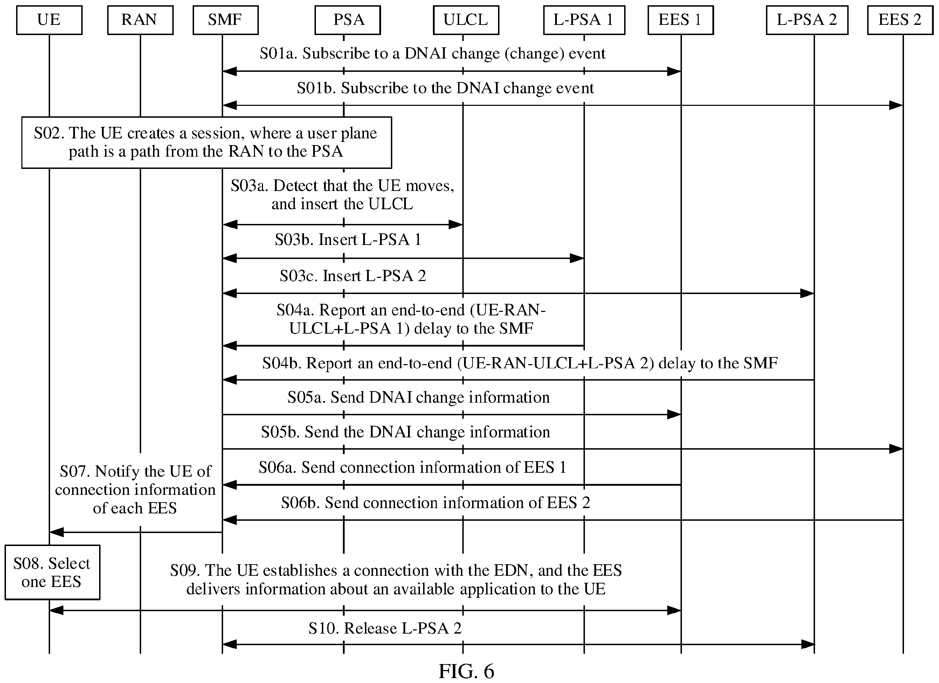

FIG. 6 is a schematic flowchart of interaction between a plurality of network elements in a communication system according to an embodiment of this application. In a scenario described in this embodiment, each EHE or EDN subscribes to a DNAI change event from an adjacent network. After the UE creates a session, the UE may move and enter a service range of one or more EDNs. An SMF inserts a ULCL and an L-PSA. The SMF indicates the event to each adjacent EHE or EDN that subscribes to the DNAI change event. Each EHE or EDN sends its own EHE information or EDN information to the SMF. Subsequently, the SMF may notify the UE of the EHE information or the EDN information. An example in which a control network element included in each edge network is an EES, a core network element is an SMF, a user plane network element is an L-PSA, and a terminal device is UE is used for description. A specific procedure includes the following steps.

S01a. EES 1 subscribes to a DNAI change (change) event or a user plane management (user plane management) event from the SMF.

S01b. EES 2 subscribes to the DNAI change event or the user plane management (user plane management) event from the SMF.

A control network element of the EHE or the EDN is an EES, and the EES may also be referred to as an AF (application function). For example, AF 1 and AF 2 separately subscribe to the DNAI change event from the SMF. The AF may directly subscribe to the event from the SMF, or may subscribe to the event from the SMF via a PCF and an NEF.

S02. The UE creates a session, where a user plane path includes a path from a RAN to a protocol data unit session anchor (PDU session anchor, PSA). The PSA is a central anchor of the session, and is far away from a location of the UE.

How the UE creates the session, and how the UE selects the PSA and creates a tunnel between the RAN and the PSA are not described again, where the user plane path includes UE-RAN-PSA.

S03a. The SMF detects that the UE moves, and inserts a ULCL.

The SMF detects that the UE moves, and selects a ULCL and inserts the ULCL, including establishing an N3 tunnel between the ULCL and the RAN and an N9 tunnel between the ULCL and the PSA.

S03b. The SMF inserts L-PSA 1.

S03c. The SMF inserts L-PSA 2.

The SMF selects an adjacent L-PSA, and establishes an N9 tunnel between the ULCL and the L-PSA. The ULCL and the L-PSA may be co-deployed.

S04a. L-PSA 1 measures an end-to-end delay between the UE and L-PSA 1, and reports the delay to the SMF.

S04b. L-PSA 2 measures an end-to-end delay between the UE and L-PSA 2, and reports the delay to the SMF.

Specifically, an L-PSA on each candidate path measures an end-to-end delay, and reports the delay to the SMF. A delay measurement process is not described in detail.

S05a. The SMF sends DNAI change information or a user plane management message to EES 1.

S05b. The SMF sends the DNAI change information or the user plane management message to EES 2.

The SMF sends a DNAI change notification or the user plane management message to an AF corresponding to each adjacent L-PSA. Optionally, the notification message includes a DNAI identifier corresponding to the L-PSA or location information of the UE.

S06a. EES 1 sends EDN1 information to the SMF, where the EDN1 information includes connection information of EES 1 and/or connection information of an EAS.

S06b. EES 2 sends EDN2 information to the SMF, where the EDN2 information includes connection information of EES 2 and/or the connection information of the EAS.

Specifically, the AF includes EHE information (for example, an MEP address) or EDN information (for example, EES address information or EAS (list) information such as EAS address information in the EDN) in a reply message. The EHE information or the EDN information is used for the UE to establish a connection with the EES or the EAS. For example, the EHE information or the EDN information may be an IP address, an FQDN, or a URI/URL of the EES or the EAS. Optionally, the EHE information or the EDN information may further carry indication information, and the indication information indicates the SMF to send the EHE information or the EDN information to the UE. Optionally, the EHE information or the EDN information further includes N6 routing information (routing information), and the routing information indicates the L-PSA to offload a subsequent data packet to a corresponding EDN.

S07. The SMF notifies the UE of each piece of EDN information. For example, the EDN1 information includes the connection information of EES 1 and/or the connection information of the EAS, and the EDN2 information includes the connection information of EES 2 and/or the connection information of the EAS.

The SMF sends the EHE information or the EDN information and a delay of a corresponding path to the UE. The SMF may send the EHE information or the EDN information to the UE based on a local configuration or based on the indication information in step S06. Optionally, the SMF sends a delay of a path corresponding to each EHE or EDN to the UE.

S08. The UE selects one EES or EAS to establish a connection.

If the UE receives a plurality of pieces of EHE information or EDN information, the UE selects one EHE or EDN based on a configuration or a policy, for example, selects an EHE or EDN corresponding to a minimum delay.

S09. The UE establishes a connection with the EDN.

In an implementation, the UE establishes a connection with the EES, and the EES delivers information about an available EAS to the UE. The UE establishes a connection with the MEP or the EES based on the EHE information or the EDN information, and the AF delivers information about an available application (for example, information about whether the application supports migration, and load of the application) to the UE.

In an implementation, if the UE receives address information of the EAS, the UE directly establishes a connection with the EAS.

S10. The SMF releases L-PSA 2 corresponding to an EHE or an EDN that has not been accessed.

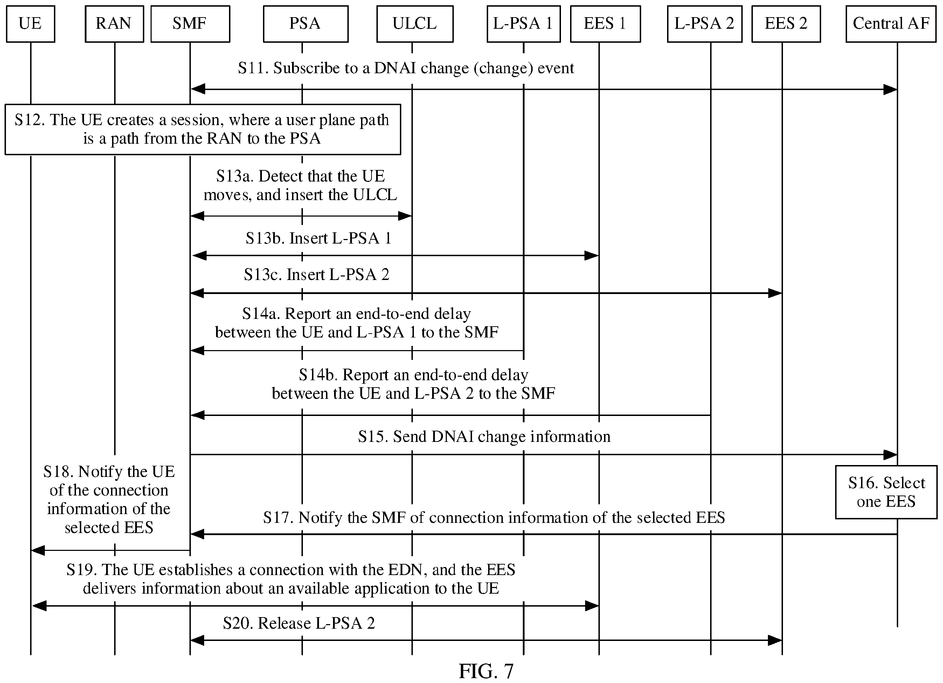

FIG. 7 is a schematic flowchart of interaction between a plurality of network elements in a communication system according to an embodiment of this application. A difference between a scenario in this embodiment and the scenario in the foregoing embodiment lies in that there is a central AF, which may be a network element in a control plane or a management plane. Specifically, the central AF may be an ECS. The central AF, instead of each AF, subscribes to a DNAI change or a user plane management event from an SMF. When the event is detected, the SMF notifies only the central AF of the event. In addition, when there are a plurality of EDNs available at the same time, the central AF decides to send information about one or more EDNs to the UE. However, in the foregoing embodiment, the information about the one or more EDNs is sent to the UE, and the UE makes a decision. The embodiment shown in FIG. 7 mainly includes the following procedure.

S11. The central AF subscribes to the DNAI change (change) event or the user plane management event from the SMF.

The central (central) AF subscribes to the DNAI change event or the user plane management event (user plane management event) from a network. The central (central) AF may also be replaced with an ECS. This is not limited. That the AF subscribes to the event includes: The central AF directly subscribes to the event from a network element (for example, the SMF), or the AF subscribes to the event from the SMF via an NEF.

S12. The UE creates a session, where a user plane path includes a path from a RAN to a PSA.

S13a. The SMF detects that the UE moves, and inserts a ULCL.

S13b. The SMF inserts L-PSA 1.

S13c. The SMF inserts L-PSA 2.

S14a. L-PSA 1 measures an end-to-end delay between the UE and L-PSA 1, and reports the delay to the SMF.

S14b. L-PSA 2 measures an end-to-end delay between the UE and L-PSA 2, and reports the delay to the SMF.

S15. The SMF sends DNAI change information to the central AF.

For example, the SMF detects that the user plane management event occurs and notifies the central AF of the event. Optionally, the DNAI change information includes an end-to-end delay of each candidate path. Optionally, the DNAI change information further includes location information of the UE, or a DNAI identifier or a DNAI identifier list corresponding to the L-PSA.

S16. The central AF selects connection information of one or more edge networks (EHEs or EDNs), or selects connection information of network elements (EESs or EASs) in the one or more edge networks (EHEs or EDNs). Optionally, the ECS sends connection information of all configured EDNs to the UE. Optionally, the ECS determines the one or more edge networks based on the received location information, the ECS determines one or more EESs based on the received location information, or the ECS determines one or more EASs based on the received location information. Optionally, the ECS sends connection information of all configured EDNs to the UE.

In an implementation, a user plane path between each UPF and an edge network has a unique DNAI identifier. When a notification message includes one or more DNAI identifiers, the ECS may determine that an edge network corresponding to the DNAI identifier is an edge network currently most suitable for serving the UE, that is, determine that an edge network corresponding to the DNAI identifier is a first network. A first network element is a network element in the edge network corresponding to the DNAI identifier. In another implementation, service range information of the edge network is configured on the ECS. When the notification message includes a location of the terminal device, the ECS determines that an edge network whose service range information includes the location of the terminal device is the edge network currently most suitable for serving the UE, that is, a first edge network. The first network element is a network element in the first edge network. In another implementation, service range information of a network element in the edge network, for example, service range information of the EES and/or service range information of the EAS, is configured on the ECS. When the notification message includes a location of the terminal device, the ECS determines that a network element whose service range includes the location of the terminal device is the first network element. Optionally, after the ECS determines the first network, the ECS determines the first network element. Assuming that the first network, namely, the EDN, includes a plurality of network elements, for example, one EES and a plurality of EASs, the first network element may be a plurality of network elements, or may be a subset of the plurality of network elements.

The connection information of the edge network (EHE or EDN) may be but is not limited to: EES address information, and EAS (list) information and EAS address information in the EDN. The address information is used for the UE to establish a connection with the EES or the EAS, and may be an IP address, an FQDN, a URI, a URL, an EAS identifier, or the like. The edge network information may also be understood as the connection information of the first network element in the foregoing embodiments.

The central AF (for example, the ECS) determines the one or more edge networks (EHEs or EDNs) based on a preconfiguration or an edge network selection policy, or in other manners. A specific manner is not limited. In an implementation, one or more EHEs or EDNs corresponding to a minimum delay are selected, one or more EHEs or EDNs with minimum current load are selected, and so on. In another implementation, the central AF has service range information of each EHE or EDN. If the DNAI change information in S15 includes the location information of the UE or the DNAI identifier corresponding to the L-PSA, when service area information of an EDN includes the location information of the UE or the DNAI identifier corresponding to the L-PSA, the central AF determines that the edge network is a selected edge network, so that the UE establishes a connection with the edge network.

S17. The central AF notifies the SMF of information about the selected edge network. For example, the information about the edge network includes connection information of a selected EES.

S18. The SMF notifies the UE of the information about the selected edge network. For example, the information about the edge network includes the connection information of the selected EES.

S19. The UE establishes a connection with the EDN.

In an implementation, the UE establishes a connection with the EES, and the EES delivers information about an available EAS to the UE. The UE establishes a connection with the MEP or the EES based on the EHE information or the EDN information, and the AF delivers information about an available application (for example, information about whether the application supports migration, and load of the application) to the UE. Optionally, a request sent by the UE to the EES carries identification information of the EAS or an FQDN of the EAS, and the EES delivers corresponding address information to the UE.

In an implementation, if the UE receives address information of the EAS, the UE directly establishes a connection with the EAS.

S20. The SMF releases L-PSA 2.

It can be learned from the foregoing example that the central AF subscribes to the DNAI change event or the user plane management event from a 5G network, to perceive a change in an access location of the UE. When receiving the DNAI change or the user plane management event, the EHE pushes information about a selected edge network to the SMF, and then the SMF notifies the UE of the information about the edge network. Optionally, the SMF obtains end-to-end delay information from the L-PSA, and sends the delay information to the UE or the central AF. The UE or the AF determines an optimal EHE. The UE initiates a connection with the edge network. The UE may obtain information about an available application from the EHE. In this embodiment of this application, the central AF dynamically delivers information about an available EDN based on the location of the UE, and the UPF and the SMF do not need to configure an application (App) deployed in the EDN. In this case, coupling is reduced.

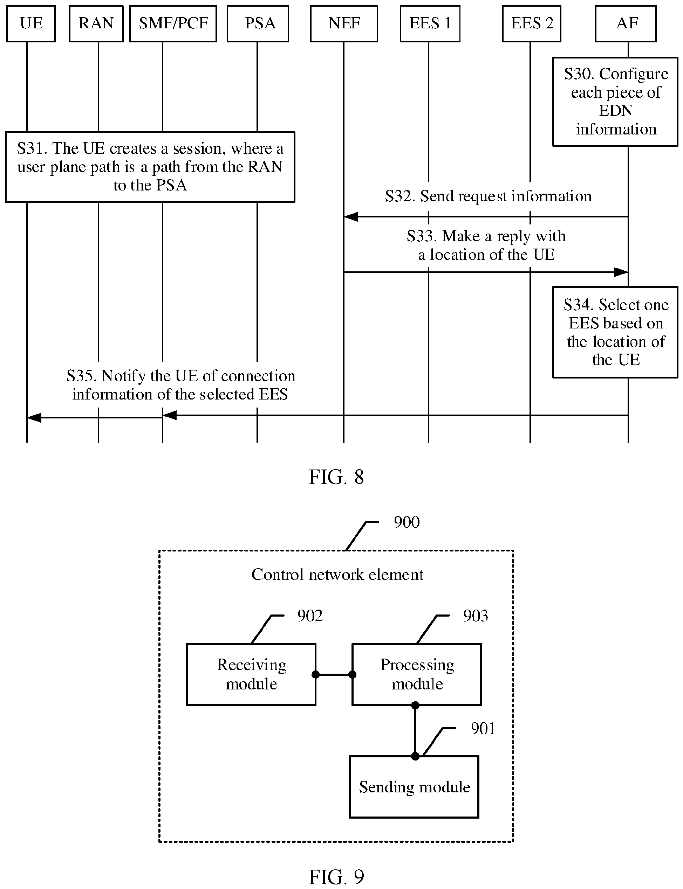

FIG. 8 is a schematic flowchart of interaction between a plurality of network elements in a communication system according to an embodiment of this application. The following procedure is mainly included.

S30. An AF (for example, an ECS) configures each piece of EDN information or EHE information, where the EDN information or the EHE information may include but is not limited to one or more of the following information: a service range and load of an EDN, corresponding EES information and EAS information, and the like.

S31. UE creates a session, where a user plane path is a path from a RAN to a PSA.

S32. The AF sends request information or subscription request information. For example, the request information may be the location request information in the foregoing embodiments.

In an implementation, the AF sends a request message to an NEF to request a location of the UE.

In another implementation, the AF sends the subscription request information to the NEF, to subscribe to a DNAI change corresponding to the UE or subscribe to a user plane management event of the session of the UE. Optionally, the DNAI change corresponding to the UE or the user plane management event of the session of the UE is detected by an SMF, and the NEF may further invoke a service of the SMF. It should be noted that, in a specific scenario, if the AF may directly communicate with the SMF, the AF sends the subscription request information to the SMF to subscribe to the DNAI change corresponding to the UE or subscribe to the user plane management event of the session of the UE. This is not shown in FIG. 8.

S33. The NEF replies to the AF with the location of the UE.

In an implementation, the NEF sends the location information of the UE to the AF.

Step S33 may be replaced with the following step: In another implementation, when the SMF or the NEF detects a DNAI change corresponding to the UE or a user plane path change of the session, the SMF or the NEF sends notification information to the AF. Optionally, the notification message includes one or more DNAI identifiers corresponding to a UPF serving the UE.

S34. Based on a received message, the AF determines information about one or more edge networks, or selects connection information of a network element (EES or EAS) in the one or more edge networks (EHEs or EDNs). For a determining manner, refer to the descriptions of S16. Details are not described again.

The information about the edge network (EHE or EDN) may be but is not limited to: EES address information, and EAS (list) information such as EAS address information in the EDN. The address information is used for the UE to establish a connection with the EES or EAS, and may be an IP address, an FQDN, a URI, a URL, or the like.

The AF (for example, the ECS) determines the one or more edge networks (EHEs or EDNs) based on a configuration or a policy, or in other manners. A specific manner is not limited. In an implementation, one or more EHEs or EDNs corresponding to a minimum delay are selected, one or more EHEs or EDNs with minimum current load are selected, and so on. In another implementation, the AF has service range information of each EHE or EDN. If the DNAI change information in S15 includes the location information of the UE or the DNAI identifier corresponding to the L-PSA, when service area information of an EDN includes the location information of the UE or the DNAI identifier corresponding to the L-PSA, the AF determines that the edge network is a selected edge network, so that the UE establishes a connection with the edge network.

S35. The AF notifies the UE of information about the determined edge network. For example, the information about the edge network includes connection information of a selected EES.

In an implementation, the AF notifies the UE of the information about the edge network through an interface (for example, EDGE-4) between the AF and the UE. In another implementation, the AF first sends the information about the edge network to a core network element, for example, the SMF, the NEF, an AMF, or a PCF, and then the core network element sends the information about the edge network to the UE. It should be noted that when the information is sent to the UE via the core network element, the information may need to pass through a plurality of core network elements. A specific path is not limited. For example, the AF sends the information to the NEF, the NEF sends the information to the SMF, the SMF sends the information to the AMF, and the AMF sends the information to the UE. Alternatively, the AF sends the information to the SMF, the SMF sends the information to the AMF, and the AMF sends the information to the UE.

It should be noted that, for brief description, the foregoing method embodiments are represented as a series of actions. However, a person skilled in the art should appreciate that this application is not limited to the described order of the actions, because according to this application, some steps may be performed in other orders or simultaneously. It should be further appreciated by a person skilled in the art that embodiments described in this specification all belong to example embodiments, and the involved actions and modules are not necessarily required by this application.

To better implement the solutions of embodiments of this application, a related apparatus for implementing the solutions is further provided below.

Referring to FIG. 9, a control network element 900 provided in an embodiment of this application may include a sending module 901, a receiving module 902, and a processing module 903.

The processing module is configured to receive first information from a core network element by using the receiving module, where the first information indicates that an edge network corresponding to a user plane network element serving a terminal device changes.

The processing module is configured to send connection information of a first network element to the terminal device based on the first information by using the sending module, where the first network element is a network element in a first edge network corresponding to the user plane network element, and the connection information is used for the terminal device to connect to the first network element.

In some embodiments of this application, before the receiving, by a control network element, first information from a core network element, the method further includes:
the processing module is configured to send subscription request information to the core network element by using the sending module, where the subscription request information requests the core network element to send the first information when detecting that a location of the terminal device changes, the subscription request information requests the core network element to send the first information when detecting that the edge network corresponding to the user plane network element changes, or the subscription request information requests the core network element to send the first information when detecting that a user plane management event occurs.

In some embodiments of this application, the first information further includes the location of the terminal device; and
the processing module is configured to: determine the first edge network or determine the first network element based on at least the location of the terminal device.

In some embodiments of this application, the control network element is a central control network element, and a plurality of edge networks correspond to the user plane network element;
the processing module is configured to: select at least one edge network from the plurality of edge networks as the first edge network, or select at least one network element from network elements included in the plurality of edge networks as the first network element; and
the processing module is configured to send the connection information to the terminal device by using the sending module.

In some embodiments of this application, the processing module is configured to receive a plurality of pieces of delay information from the core network element by using the receiving module, where each piece of delay information includes a transmission delay between the terminal device and one user plane network element; and
the processing module is configured to: select at least one edge network from the plurality of edge networks as the first edge network based on at least the plurality of pieces of delay information; or select at least one network element from network elements included in the plurality of edge networks as the first network element based on at least the plurality of pieces of delay information.

In some embodiments of this application, the control network element is a central control network element, one edge network corresponds to the user plane network element, and the one edge network corresponding to the user plane network element is the first edge network;
the processing module is configured to select at least one network element from network elements in the first edge network as the first network element; and
the processing module is configured to send the connection information to the terminal device by using the sending module.

In some embodiments of this application, the processing module is configured to send the connection information to the terminal device by using the sending module and the core network element.

In some embodiments of this application, the first network element includes at least one of the following: a first control network element in the first edge network and a first application network element in the first edge network.

In some embodiments of this application, the processing module is configured to: after the terminal device establishes a connection with the first control network element, send application information of the first application network element to the terminal device by using the sending module.

It can be learned from the foregoing descriptions of this embodiment of this application that the core network element sends the first information to the control network element, where the first information indicates that the edge network corresponding to the user plane network element serving the terminal device changes. The control network element determines, based on the first information, that the edge network corresponding to the user plane network element serving the terminal device changes. The control network element may send the connection information of the first network element to the terminal device. The first network element is a network element in the first edge network corresponding to the user plane network element. The terminal device may obtain, from the control network element, the connection information of the first network element, and establish a connection between the terminal device and the first network element. The edge network does not need to be preconfigured for the terminal device provided in this embodiment of this application. The terminal device may establish the connection between the terminal device and the first network element based on the connection information of the first network element sent by the control network element. In this case, connection establishment is dynamically triggered based on a change of the edge network corresponding to the user plane network element, and a success rate of establishing a connection by the terminal device with the edge network is improved.

Referring to FIG. 9, another control network element 900 provided in an embodiment of this application may include a sending module 901, a receiving module 902, and a processing module 903.

The processing module is configured to receive first information from a first core network element by using the receiving module, where the first information indicates a location of a terminal device.

The processing module is configured to send connection information of a first network element to the terminal device based on the first information by using the sending module, where the first network element is a network element in a first edge network corresponding to a user plane network element serving the terminal device, and the connection information is used for the terminal device to connect to the first network element.

In some embodiments of this application, the processing module is configured to send location request information to the first core network element by using the sending module, where the location request information requests the first core network element to send the first information; or
the processing module is configured to send subscription request information to the first core network element by using the sending module, where the subscription request information requests the first core network element to send the first information when detecting that the location of the terminal device changes, the subscription request information requests the first core network element to send the first information when detecting that the edge network corresponding to the user plane network element changes, or the subscription request information requests the core network element to send the first information when detecting that a user plane management event occurs.

In some embodiments of this application, a plurality of edge networks correspond to the user plane network element; and
the processing module is configured to select at least one edge network from the plurality of edge networks as the first edge network based on at least the location of the terminal device; or
the processing module is configured to select at least one network element from network elements included in the plurality of edge networks as the first network element based on at least the location of the terminal device.

In some embodiments of this application, the processing module is configured to send the connection information to the terminal device based on the first information by using the sending module and a second core network element.

In some embodiments of this application, the first network element includes at least one of the following: a first control network element in the first edge network and a first application network element in the first edge network.

In some embodiments of this application, the processing module is configured to: after the terminal device establishes a connection with the first control network element, send application information of the first application network element to the terminal device by using the sending module.

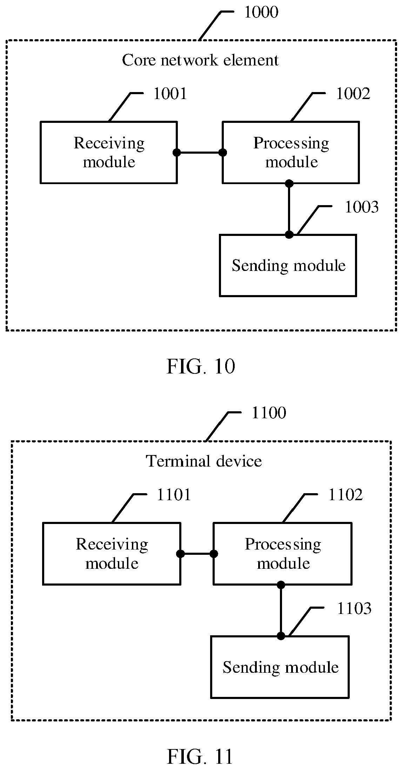

Referring to FIG. 10, a core network element 1000 provided in an embodiment of this application may include a receiving module 1001, a processing module 1002, and a sending module 1003.

The processing module is configured to send first information to at least one control network element by using the sending module, where the first information indicates that an edge network corresponding to a user plane network element serving a terminal device changes.

The processing module is configured to receive, by using the receiving module, connection information of a first network element sent by the at least one control network element, where the first network element is a network element in a first edge network corresponding to the user plane network element, and the connection information is used for the terminal device to connect to the first network element.

The processing module is configured to send the connection information of the first network element to the terminal device by using the sending module.

In some embodiments of this application, the processing module is configured to receive, by using the receiving module, location request information sent by the at least one control network element, where the location request information requests the core network element to send the first information; or
the processing module is configured to receive, by using the receiving module, subscription request information sent by the control network element, where the subscription request information requests the core network element to send the first information when detecting that a location of the terminal device changes, or the subscription request information requests the core network element to send the first information when detecting that the edge network corresponding to the user plane network element changes.

In some embodiments of this application, the first information further includes the location of the terminal device; and
the location of the terminal device is used for the at least one control network element to determine the first edge network or determine the first network element.

In some embodiments of this application, the at least one control network element includes a central control network element, and
a plurality of edge networks correspond to the user plane network element; and
the first edge network is at least one edge network selected by the central control network element from the plurality of edge networks; or
the first network element is at least one network element selected by the central control network element from network elements included in the plurality of edge networks.

In some embodiments of this application, the processing module is configured to receive delay information from a plurality of user plane network element by using the receiving module, where each piece of delay information includes a transmission delay between the terminal device and one user plane network element; and
the processing module is configured to send, to the central control network element by using the sending module, the delay information from the plurality of user plane network elements, where the delay information is used for the central control network element to: select at least one edge network from the plurality of edge networks as the first edge network, or select at least one network element from network elements included in the plurality of edge networks as the first network element.

In some embodiments of this application, the processing module is configured to receive, by using the receiving module, indication information sent by the at least one control network element, where the indication information indicates the core network element to send the connection information to the terminal device.

It can be learned from the foregoing descriptions of this embodiment of this application that the core network element sends the first information to the control network element, where the first information indicates that the edge network corresponding to the user plane network element serving the terminal device changes. The control network element determines, based on the first information, that the edge network corresponding to the user plane network element serving the terminal device changes. The control network element may send the connection information of the first network element to the terminal device. The first network element is a network element in the first edge network corresponding to the user plane network element. The terminal device may obtain, from the control network element, the connection information of the first network element, and establish a connection between the terminal device and the first network element. The edge network does not need to be preconfigured for the terminal device provided in this embodiment of this application. The terminal device may establish the connection between the terminal device and the first network element based on the connection information of the first network element sent by the control network element. In this case, connection establishment is dynamically triggered based on a change of the edge network corresponding to the user plane network element, and a success rate of establishing a connection by the terminal device with the edge network is improved.

Referring to FIG. 11, a terminal device 1100 provided in an embodiment of this application may include a receiving module 1101, a processing module 1102, and a sending module 1103.

The processing module is configured to receive, from a control network element by using the receiving module, connection information of a first network element, where the first network element is a network element in a first edge network corresponding to a user plane network element serving the terminal device.

The processing module is configured to establish a connection between the terminal device and the first network element based on the connection information.

In some embodiments of this application, a plurality of edge networks correspond to the user plane network element; and
the processing module is configured to: select at least one edge network from the plurality of edge networks as the first edge network, or select at least one network element from network elements included in the plurality of edge networks as the first network element; and
the terminal device establishes a connection between the terminal device and the first network element based on the connection information.

In some embodiments of this application, the processing module is configured to receive, by using the receiving module, delay information of a plurality of user plane network elements sent by the core network element, where each piece of delay information includes a transmission delay between the terminal device and one user plane network element; and
the processing module is configured to: select at least one edge network from the plurality of edge networks as the first edge network based on at least the delay information; or select at least one network element from network elements included in the plurality of edge networks as the first network element based on at least the delay information.

In some embodiments of this application, the first network element includes at least one of the following: a first control network element in the first edge network and a first application network element in the first edge network.

In some embodiments of this application, the processing module is configured to: after the terminal device establishes a connection with the first control network element, receive, by using the receiving module, application information that corresponds to the first application network element and that is sent by the first control network element; and
the processing module is configured to send an access request to the first application network element by using the sending module.

It can be learned from the foregoing descriptions of this embodiment of this application that the core network element sends the first information to the control network element, where the first information indicates that the edge network corresponding to the user plane network element serving the terminal device changes. The control network element determines, based on the first information, that the edge network corresponding to the user plane network element serving the terminal device changes. The control network element may send the connection information of the first network element to the terminal device. The first network element is a network element in the first edge network corresponding to the user plane network element. The terminal device may obtain, from the control network element, the connection information of the first network element, and establish a connection between the terminal device and the first network element. The edge network does not need to be preconfigured for the terminal device provided in this embodiment of this application. The terminal device may establish the connection between the terminal device and the first network element based on the connection information of the first network element sent by the control network element. In this case, connection establishment is dynamically triggered based on a change of the edge network corresponding to the user plane network element, and a success rate of establishing a connection by the terminal device with the edge network is improved.

It should be noted that, content such as information exchange between the modules/units of the apparatuses and the execution processes thereof is based on the same idea as the method embodiments of this application, and produces the same technical effects as the method embodiments of this application. For specific content, refer to the foregoing descriptions in the method embodiments of this application. Details are not described herein again.

An embodiment of this application further provides a computer storage medium. The computer storage medium stores a program. The program is executed to perform some or all of the steps recorded in the method embodiment.

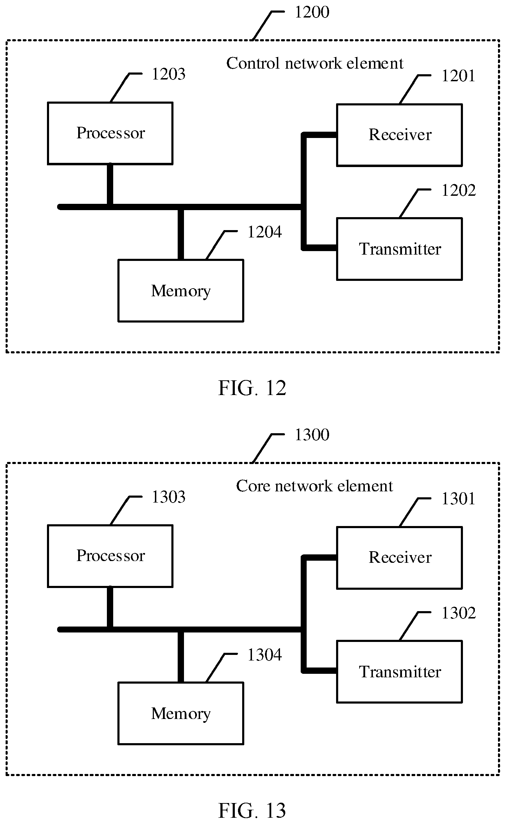

The following describes another control network element provided in an embodiment of this application. Referring to FIG. 12, the control network element 1200 includes:
a receiver 1201, a transmitter 1202, a processor 1203, and a memory 1204 (where there may be one or more processors 1203 in the control network element 1200, and one processor is used as an example in FIG. 12). In some embodiments of this application, the receiver 1201, the transmitter 1202, the processor 1203, and the memory 1204 may be connected through a bus or in another manner. In FIG. 12, connection through a bus is used as an example.

The memory 1204 may include a read-only memory and a random access memory, and provide instructions and data to the processor 1203. A part of the memory 1204 may further include a non-volatile random access memory (non-volatile random access memory, NVRAM). The memory 1204 stores an operating system and operation instructions, an executable module or a data structure, or a subset thereof, or an extended set thereof. The operation instructions may include various operation instructions used to implement various operations. The operating system may include various system programs, to implement various basic services and process a hardware-based task.

The processor 1203 controls an operation of the control network element, and the processor 1203 may also be referred to as a central processing unit (central processing unit, CPU). In a specific application, components of the control network element are coupled together through a bus system. In addition to including a data bus, the bus system may further include a power bus, a control bus, a status signal bus, and the like. However, for clear description, various types of buses in the figure are marked as the bus system.

The methods disclosed in the embodiments of this application may be applied to the processor 1203, or may be implemented by using the processor 1203. The processor 1203 may be an integrated circuit chip and has a signal processing capability. In an implementation process, steps in the foregoing methods may be implemented by using a hardware integrated logical circuit in the processor 1203, or by using instructions in a form of software. The processor 1203 may be a general-purpose processor, a digital signal processor (digital signal processor, DSP), an application-specific integrated circuit (application-specific integrated circuit, ASIC), a field-programmable gate array (field-programmable gate array, FPGA) or another programmable logic device, a discrete gate or a transistor logic device, or a discrete hardware component. It may implement or perform the methods, the steps, and logical block diagrams that are disclosed in embodiments of this application. The general-purpose processor may be a microprocessor, or the processor may be any conventional processor or the like. Steps of the methods disclosed with reference to embodiments of this application may be directly executed and accomplished by using a hardware decoding processor, or may be executed and accomplished by using a combination of hardware and software modules in the decoding processor. A software module may be located in a mature storage medium in the art, such as a random access memory, a flash memory, a read-only memory, a programmable read-only memory, an electrically erasable programmable memory, or a register. The storage medium is located in the memory 1204, and the processor 1203 reads information in the memory 1204 and completes the steps in the foregoing methods in combination with hardware of the processor 1203.

The receiver 1201 may be configured to: receive input digital or character information, and generate a signal input related to a related setting and function control of the control network element. The transmitter 1202 may include a display device such as a display screen, and the transmitter 1202 may be configured to output digital or character information by using an external interface.

In this embodiment of this application, the processor 1203 is configured to perform the connection establishment method performed by the foregoing control network element.

The following describes another core network element provided in an embodiment of this application. Referring to FIG. 13, the core network element 1300 includes:
a receiver 1301, a transmitter 1302, a processor 1303, and a memory 1304 (where there may be one or more processors 1303 in the core network element 1300, and one processor is used as an example in FIG. 13). In some embodiments of this application, the receiver 1301, the transmitter 1302, the processor 1303, and the memory 1304 may be connected through a bus or in another manner. In FIG. 13, connection through a bus is used as an example.

The memory 1304 may include a read-only memory and a random access memory, and provide instructions and data for the processor 1303. Apart of the memory 1304 may further include an NVRAM. The memory 1304 stores an operating system and operation instructions, an executable module or a data structure, or a subset thereof, or an extended set thereof. The operation instructions may include various operation instructions used to implement various operations. The operating system may include various system programs, to implement various basic services and process a hardware-based task.

The processor 1303 controls an operation of the core network element, and the processor 1303 may also be referred to as a CPU. In a specific application, components of the core network element are coupled together through a bus system. In addition to including a data bus, the bus system may further include a power bus, a control bus, a status signal bus, and the like. However, for clear description, various types of buses in the figure are marked as the bus system.

The methods disclosed in the embodiments of this application may be applied to the processor 1303, or may be implemented by using the processor 1303. The processor 1303 may be an integrated circuit chip, and has a signal processing capability. In an implementation process, steps in the foregoing methods may be implemented by using a hardware integrated logical circuit in the processor 1303, or by using instructions in a form of software. The foregoing processor 1303 may be a general-purpose processor, a DSP, an ASIC, an FPGA or another programmable logic device, a discrete gate or transistor logic device, or a discrete hardware component. It may implement or perform the methods, the steps, and logical block diagrams that are disclosed in embodiments of this application. The general-purpose processor may be a microprocessor, or the processor may be any conventional processor or the like. Steps of the methods disclosed with reference to embodiments of this application may be directly executed and accomplished by using a hardware decoding processor, or may be executed and accomplished by using a combination of hardware and software modules in the decoding processor. A software module may be located in a mature storage medium in the art, such as a random access memory, a flash memory, a read-only memory, a programmable read-only memory, an electrically erasable programmable memory, or a register. The storage medium is located in the memory 1304, and the processor 1303 reads information in the memory 1304 and completes the steps in the foregoing methods in combination with hardware in the processor 1303.

In this embodiment of this application, the processor 1303 is configured to perform the connection establishment method performed by the core network element.

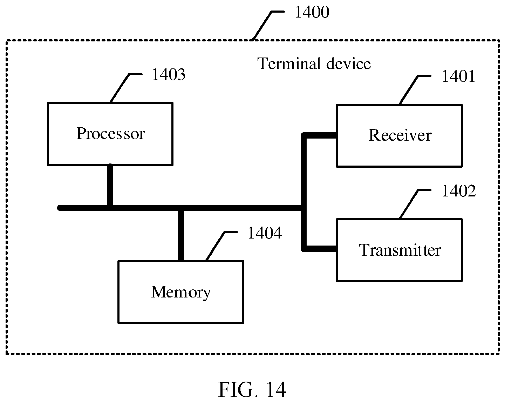

The following describes another terminal device provided in an embodiment of this application. Referring to FIG. 14, the terminal device 1400 includes:
a receiver 1401, a transmitter 1402, a processor 1403, and a memory 1404 (where there may be one or more processors 1403 in the terminal device 1400, and one processor is used as an example in FIG. 14). In some embodiments of this application, the receiver 1401, the transmitter 1402, the processor 1403, and the memory 1404 may be connected through a bus or in another manner. In FIG. 14, connection through a bus is used as an example.

The memory 1404 may include a read-only memory and a random access memory, and provide instructions and data for the processor 1403. Apart of the memory 1404 may further include an NVRAM. The memory 1404 stores an operating system and operation instructions, an executable module or a data structure, or a subset thereof, or an extended set thereof. The operation instructions may include various operation instructions used to implement various operations. The operating system may include various system programs, to implement various basic services and process a hardware-based task.

The processor 1403 controls operations of the terminal device, and the processor 1403 may also be referred to as a CPU. In a specific application, components of the terminal device are coupled together through a bus system. In addition to a data bus, the bus system may further include a power bus, a control bus, a status signal bus, and the like. However, for clear description, various types of buses in the figure are marked as the bus system.

The methods disclosed in the embodiments of this application may be applied to the processor 1403, or may be implemented by using the processor 1403. The processor 1403 may be an integrated circuit chip, and has a signal processing capability. In an implementation process, steps in the foregoing methods may be implemented by using a hardware integrated logical circuit in the processor 1403, or by using instructions in a form of software. The foregoing processor 1403 may be a general-purpose processor, a DSP, an ASIC, an FPGA or another programmable logic device, a discrete gate or transistor logic device, or a discrete hardware component. It may implement or perform the methods, the steps, and logical block diagrams that are disclosed in embodiments of this application. The general-purpose processor may be a microprocessor, or the processor may be any conventional processor or the like. Steps of the methods disclosed with reference to embodiments of this application may be directly executed and accomplished by using a hardware decoding processor, or may be executed and accomplished by using a combination of hardware and software modules in the decoding processor. A software module may be located in a mature storage medium in the art, such as a random access memory, a flash memory, a read-only memory, a programmable read-only memory, an electrically erasable programmable memory, or a register. The storage medium is located in the memory 1404, and the processor 1403 reads information in the memory 1404 and completes the steps in the foregoing methods in combination with hardware in the processor 1403.

In this embodiment of this application, the processor 1403 is configured to perform the connection establishment method performed by the terminal device.

In another possible design, when the control network element, the core network element, and the terminal device are chips, the chips include a processing unit and a communication unit. The processing unit may be, for example, a processor. The communication unit may be, for example, an input/output interface, a pin, or a circuit. The processing unit may execute computer-executable instructions stored in a storage unit, so that the chip in the terminal performs the report information sending method according to any one of the possible implementations of the first aspect. Optionally, the storage unit is a storage unit in the chip, for example, a register or a cache. Alternatively, the storage unit may be a storage unit that is in the terminal and that is located outside the chip, for example, a read-only memory (read-only memory, ROM), another type of static storage device that can store static information and instructions, or a random access memory (random access memory, RAM).

The processor mentioned anywhere above may be a general-purpose central processing unit, a microprocessor, an ASIC, or one or more integrated circuits configured to control program execution of the methods.

In addition, it should be noted that the described apparatus embodiment is merely an example. The units described as separate parts may or may not be physically separate, and parts displayed as units may or may not be physical units, may be located in one position, or may be distributed on a plurality of network units. Some or all the modules may be selected according to actual needs to achieve the objectives of the solutions of embodiments. In addition, in the accompanying drawings of the apparatus embodiments provided by this application, connection relationships between modules indicate that the modules have communication connections with each other, which may be specifically implemented as one or more communication buses or signal cables.

Based on the description of the foregoing implementations, a person skilled in the art may clearly understand that this application may be implemented by software in addition to necessary universal hardware, or by dedicated hardware, including a dedicated integrated circuit, a dedicated CPU, a dedicated memory, a dedicated component, and the like. Generally, any functions that can be performed by a computer program can be easily implemented by using corresponding hardware. Moreover, a specific hardware structure used to achieve a same function may be in various forms, for example, in a form of an analog circuit, a digital circuit, or a dedicated circuit. However, as for this application, software program implementation is a better implementation in most cases. Based on such an understanding, the technical solutions in this application essentially or the part contributing to the prior art may be implemented in a form of a software product. The computer software product is stored in a readable storage medium, such as a floppy disk, a USB flash drive, a removable hard disk, a ROM, a RAM, a magnetic disk, or an optical disc of a computer, and includes several instructions for instructing a computer device (which may be a personal computer, a server, a network device, or the like) to perform the method in embodiments of this application.

All or some of the foregoing embodiments may be implemented by using software, hardware, firmware, or any combination thereof. When software is used to implement the embodiments, all or a part of the embodiments may be implemented in a form of a computer program product.

The computer program product includes one or more computer instructions. When the computer program instructions are loaded and executed on the computer, the procedure or functions according to embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (Solid-State Drive, SSD)), or the like.

## Claims

1. A connection establishment method, wherein the method comprises:
receiving, by a control network element, first information from a core network element, wherein the first information indicates that an edge network serving a terminal device changes; and
sending, by the control network element, connection information of a first network element to the terminal device based on the first information, wherein the first network element is a network element in the edge network serving the terminal device, and the connection information is used for the terminal device to connect to the first network element.

2. The method according to claim 1, wherein before the receiving, by a control network element, first information from a core network element, the method further comprises:
sending, by the control network element, subscription request information to the core network element, wherein the subscription request information requests the core network element to send the first information when detecting that a location of the terminal device changes, the subscription request information requests the core network element to send the first information when detecting that the edge network serving the terminal device changes, or the subscription request information requests the core network element to send the first information when detecting that a user plane management event occurs.

3. The method according to claim 1 or 2, wherein the first information further comprises a data network access identifier DNAI corresponding to the edge network serving the terminal device; and
the method further comprises:
determining, by the control network element, the edge network serving the terminal device or determining the first network element based on at least the DNAI.

4. The method according to claim 1 or 2, wherein the method further comprises:
obtaining, by the control network element, the location of the terminal device from the core network element; and
determining, by the control network element, the edge network serving the terminal device or determining the first network element based on at least the location of the terminal device.

5. The method according to claim 3 or 4, wherein the determining, by the control network element, the edge network serving the terminal device or determining the first network element based on at least the location of the terminal device comprises:
determining, by the control network element, a network element whose service range comprises the location of the terminal device as the first network element, or determining, by the control network element, an edge network whose service range comprises the location of the terminal device as the edge network serving the terminal device.

6. The method according to any one of claims 1 to 5, wherein the control network element is a central control network element, and a plurality of edge networks serve the terminal device; and
the sending, by the control network element, connection information of a first network element to the terminal device based on the first information comprises:
selecting, by the central control network element, at least one edge network from the plurality of edge networks as the edge network serving the terminal device, or selecting, by the central control network element, at least one network element from network elements comprised in the plurality of edge networks as the first network element; and
sending, by the central control network element, the connection information to the terminal device.

7. The method according to claim 6, wherein the method further comprises:
receiving, by the central control network element, a plurality of pieces of delay information from the core network element, wherein each piece of delay information comprises a transmission delay between the terminal device and one user plane network element;
the selecting, by the central control network element, at least one edge network from the plurality of edge networks as the edge network serving the terminal device comprises: selecting, by the central control network element based on at least the plurality of pieces of delay information, at least one edge network from the plurality of edge networks as the edge network serving the terminal device; and
the selecting, by the central control network element, at least one network element from network elements comprised in the plurality of edge networks as the first network element comprises: selecting, by the central control network element, at least one network element from the network elements comprised in the plurality of edge networks as the first network element based on at least the plurality of pieces of delay information.

8. The method according to any one of claims 1 to 5, wherein the control network element is a central control network element, and one edge network serves the terminal device; and
the sending, by the control network element, connection information of a first network element to the terminal device based on the first information comprises:
selecting, by the central control network element, at least one network element from network elements in the edge network serving the terminal device as the first network element; and
sending, by the central control network element, the connection information to the terminal device.

9. The method according to any one of claims 1 to 5, wherein the control network element is a control plane application network element, and a plurality of edge networks serve the terminal device; and
the sending, by the control network element, connection information of a first network element to the terminal device based on the first information comprises:
selecting, by the control plane application network element, at least one edge network from the plurality of edge networks as the edge network serving the terminal device, or selecting, by the control plane application network element, at least one network element from network elements comprised in the plurality of edge networks as the first network element; and
sending, by the control plane application network element, the connection information to the terminal device.

10. The method according to any one of claims 1 to 9, wherein the sending, by the control network element, connection information of a first network element to the terminal device comprises:
sending, by the control network element, the connection information to the terminal device via the core network element.

11. The method according to any one of claims 1 to 10, wherein the first network element comprises at least one of the following: a first control network element in the edge network serving the terminal device, and a first application network element in the edge network serving the terminal device.

12. The method according to claim 11, wherein the method further comprises:
after the terminal device establishes a connection with the first control network element, sending, by the control network element, application information of the first application network element to the terminal device.

13. The method according to any one of claims 1 to 12, wherein the location of the terminal device comprises a tracking area identity TAI or a cell identifier Cell ID.

14. A connection establishment method, wherein the method comprises:
sending, by a core network element, first information to at least one control network element, wherein the first information indicates that an edge network serving a terminal device changes;
receiving, by the core network element, connection information of a first network element sent by the at least one control network element, wherein the first network element is a network element in the edge network serving the terminal device, and the connection information is used for the terminal device to connect to the first network element; and
sending, by the core network element, the connection information of the first network element to the terminal device.

15. The method according to claim 14, wherein before the sending, by a core network element, first information to at least one control network element, the method further comprises:
receiving, by the core network element, location request information sent by the at least one control network element, wherein the location request information requests the core network element to send the first information; or
receiving, by the core network element, subscription request information sent by the control network element, wherein the subscription request information requests the core network element to send the first information when detecting that a location of the terminal device changes, the subscription request information requests the core network element to send the first information when detecting that the edge network serving the terminal device changes, or the subscription request information requests the core network element to send the first information when detecting that a user plane management event occurs.

16. The method according to claim 14 or 15, wherein the first information further comprises a data network access identifier DNAI corresponding to the edge network serving the terminal device; and
the DNAI is used for the at least one control network element to determine the edge network serving the terminal device or determine the first network element.

17. The method according to any one of claims 14 to 16, wherein the at least one control network element comprises a central control network element;
a plurality of edge network serving the terminal device; and
the edge network serving the terminal device is at least one edge network selected by the central control network element from the plurality of edge networks; or
the first network element is at least one network element selected by the central control network element from network elements comprised in the plurality of edge networks.

18. The method according to claim 17, wherein the method further comprises:
receiving, by the core network element, delay information from a plurality of user plane network elements, wherein each piece of delay information comprises a transmission delay between the terminal device and one user plane network element; and
sending, by the core network element to the central control network element, the delay information from the plurality of user plane network elements, wherein the delay information is used for the central control network element to: select at least one edge network from the plurality of edge networks as the edge network serving the terminal device, or select at least one network element from network elements comprised in the plurality of edge networks as the first network element.

19. The method according to any one of claims 14 to 18, wherein the method further comprises:
receiving, by the core network element, indication information sent by the at least one control network element, wherein the indication information indicates the core network element to send the connection information to the terminal device.

20. A connection establishment method, wherein the method comprises:
receiving, by a terminal device from a control network element, connection information of a first network element, wherein the first network element is a network element in an edge network serving the terminal device; and
establishing, by the terminal device, a connection between the terminal device and the first network element based on the connection information.

21. The method according to claim 20, wherein a plurality of edge networks serve the terminal device; and
the establishing, by the terminal device, a connection between the terminal device and the first network element based on the connection information comprises:
selecting, by the terminal device, at least one edge network from the plurality of edge networks as the edge network serving the terminal device, or selecting, by the terminal device, at least one network element from network elements comprised in the plurality of edge networks as the first network element; and
establishing, by the terminal device, a connection between the terminal device and the first network element based on the connection information.

22. The method according to claim 21, wherein the method further comprises:
receiving, by the terminal device, delay information of a plurality of user plane network elements sent by a core network element, wherein each piece of delay information comprises a transmission delay between the terminal device and one user plane network element;
the selecting, by the terminal device, at least one edge network from the plurality of edge networks as the edge network serving the terminal device comprises: selecting, by the terminal device based on at least the delay information, at least one edge network from the plurality of edge networks as the edge network serving the terminal device; and
the selecting, by the terminal device, at least one network element from network elements comprised in the plurality of edge networks as the first network element comprises: selecting, by the terminal device, at least one network element from the network elements comprised in the plurality of edge networks as the first network element based on at least the delay information.

23. The method according to any one of claims 20 to 22, wherein the first network element comprises at least one of the following: a first control network element in the edge network serving the terminal device, and a first application network element in the edge network serving the terminal device.

24. The method according to claim 23, wherein the method further comprises:
after the terminal device establishes a connection with the first control network element, receiving, by the terminal device, application information that corresponds to the first application network element and that is sent by the first control network element; and
sending, by the terminal device, an access request to the first application network element.

25. A connection establishment method, wherein the method comprises:
sending, by a core network element, first information to at least one control network element, wherein the first information indicates that an edge network serving a terminal device changes;
sending, by the at least one control network element, connection information of a first network element to the terminal device based on the first information, wherein the first network element is a network element in the edge network serving the terminal device; and
after receiving the connection information of the first network element, establishing, by the terminal device, a connection between the terminal device and the first network element based on the connection information.

26. The method according to claim 25, wherein before the sending, by a core network element, first information to at least one control network element, the method further comprises:
sending, by the at least one control network element, subscription request information to the core network element, wherein the subscription request information requests the core network element to send the first information when detecting that a location of the terminal device changes, the subscription request information requests the core network element to send the first information when detecting that the edge network serving the terminal device changes, or the subscription request information requests the core network element to send the first information when detecting that a user plane management event occurs.

27. The method according to claim 25 or 26, wherein the first information further comprises a data network access identifier DNAI corresponding to the edge network serving the terminal device; and
the method further comprises:
determining, by the at least one control network element, the edge network serving the terminal device or determining the first network element based on at least the DNAI.

28. The method according to any one of claims 25 to 27, wherein the at least one control network element is a central control network element, and a plurality of edge networks serve the terminal device; and
the sending, by the at least one control network element, connection information of a first network element to the terminal device based on the first information comprises:
selecting, by the central control network element, at least one edge network from the plurality of edge networks as the edge network serving the terminal device, or selecting, by the central control network element, at least one network element from network elements comprised in the plurality of edge networks as the first network element; and
sending, by the central control network element, the connection information to the terminal device.

29. The method according to claim 28, wherein the method further comprises:
receiving, by the central control network element, a plurality of pieces of delay information from the core network element, wherein each piece of delay information comprises a transmission delay between the terminal device and one user plane network element;
the selecting, by the central control network element, at least one edge network from the plurality of edge networks as the edge network serving the terminal device comprises: selecting, by the central control network element based on at least the plurality of pieces of delay information, at least one edge network from the plurality of edge networks as the edge network serving the terminal device; and
the selecting, by the central control network element, at least one network element from network elements comprised in the plurality of edge networks as the first network element comprises: selecting, by the central control network element, at least one network element from the network elements comprised in the plurality of edge networks as the first network element based on at least the plurality of pieces of delay information.

30. The method according to any one of claims 25 to 27, wherein the at least one control network element is a central control network element, the edge network serving the terminal device is one edge network, and the one edge network serving the terminal device is the edge network serving the terminal device; and
the sending, by the at least one control network element, connection information of a first network element to the terminal device based on the first information comprises:
selecting, by the central control network element, at least one network element from network elements in the edge network serving the terminal device as the first network element; and
sending, by the central control network element, the connection information to the terminal device.

31. The method according to any one of claims 25 to 30, wherein the sending, by the at least one control network element, connection information of a first network element to the terminal device comprises:
sending, by the at least one control network element, the connection information to the terminal device via the core network element.

32. The method according to any one of claims 25 to 31, wherein the first network element comprises at least one of the following: a first control network element in the edge network serving the terminal device, and a first application network element in the edge network serving the terminal device.

33. The method according to claim 32, wherein the method further comprises:
after the terminal device establishes a connection with the first control network element, sending, by the at least one control network element, application information of the first application network element to the terminal device.

34. A communication apparatus, wherein the communication apparatus is a control network element, and the control network element is configured to perform the method according to any one of claims 1 to 13.

35. A communication apparatus, wherein the communication apparatus is a core network element, and the core network element is configured to perform the method according to any one of claims 14 to 19.

36. A communication apparatus, wherein the communication apparatus is a terminal device, and the terminal device is configured to perform the method according to any one of claims 20 to 24.

37. A communication system, comprising a control network element, a core network element, and a terminal device, wherein
the control network element is configured to perform the method according to any one of claims 1 to 13;
the core network element is configured to perform the method according to any one of claims 14 to 19; and
the terminal device is configured to perform the method according to any one of claims 20 to 24.
